# EUROPEAN PATENT SPECIFICATION

(11) **EP 4 297 024 B1**
(45) Date of publication and mention of the grant of the patent: **08.04.2026**
(21) Application number: 23180010.3
(22) Date of filing: 19.06.2023
(51) Int. Cl.: G10L 17/26, G10L 25/18, G10L 25/51, G01V 1/00, G10L 21/14, G10L 21/12, B63B 79/00, G01V 1/38, G10L 21/0208

(54) **COMPUTERISED SYSTEM AND METHOD FOR MARINE MAMMAL DETECTION**
COMPUTERISIERTES SYSTEM UND VERFAHREN ZUR ERKENNUNG VON MEERESSÄUGETIEREN
SYSTÈME INFORMATISÉ ET PROCÉDÉ DE DÉTECTION DE MAMMIFÈRES MARINS

(30) Priority: 23.06.2022 US 202217808406
(43) Date of publication of application: 27.12.2023
(73) Proprietor: RPS Group, Inc., Abingdon Oxfordshire OX14 4SH (GB)
(72) Inventor: O'Hara, David John, Oxfordshire, OX144SH (GB); Rath, Patrick, Oxfordshire, OX144SH (GB); MACKINNON, Matthew, Oxfordshire, OX14 4SH (GB)
(74) Representative: Beck Greener LLP

(56) References cited:
- KOWARSKI KATIE A ET AL: "Near real-time marine mammal monitoring from gliders: Practical challenges, system development, and management implications", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 148, no. 3, 8 September 2020 (2020-09-08), pages 1215 - 1230, XP012249965, ISSN: 0001-4966, [retrieved on 20200908], DOI: 10.1121/10.0001811
- BERGLER CHRISTIAN ET AL: "ORCA-SPOT: An Automatic Killer Whale Sound Detection Toolkit Using Deep Learning", vol. 9, no. 1, 29 July 2019 (2019-07-29), XP093097421, Retrieved from the Internet <URL:https://www.nature.com/articles/s41598-019-47335-w> DOI: 10.1038/s41598-019-47335-w
- MAC JAMIE: "PAMGuard_DeepLearningSegmenter/deep_learning_help.md at master . macster110/PAMGuard_DeepLearningSegmenter . GitHub", 5 October 2021 (2021-10-05), XP093097229, Retrieved from the Internet <URL:https://github.com/macster110/PAMGuard_DeepLearningSegmenter/blob/master/deep_learning_help.md> [retrieved on 20231101]
- PETER J DUGAN ET AL: "North Atlantic Right Whale acoustic signal processing: Part I. comparison of machine learning recognition algorithms", APPLICATIONS AND TECHNOLOGY CONFERENCE (LISAT), 2010 LONG ISLAND SYSTEMS, IEEE, PISCATAWAY, NJ, USA, 7 May 2010 (2010-05-07), pages 1 - 6, XP031685056, ISBN: 978-1-4244-5548-5
- LU TAO ET AL: "Detection and classification of marine mammal sounds using AlexNet with transfer learning", ECOLOGICAL INFORMATICS, ELSEVIER, AMSTERDAM, NL, vol. 62, 16 March 2021 (2021-03-16), XP086533107, ISSN: 1574-9541, [retrieved on 20210316], DOI: 10.1016/J.ECOINF.2021.101277
- GILLESPIE DOUGLAS ET AL: "PAMGUARD: Semiautomated, open source software for real-time acoustic detection and localization of cetaceans.", THE JOURNAL OF THE ACOUSTICAL SOCIETY OF AMERICA, vol. 125, no. 4_Supplement, 1 April 2009 (2009-04-01), 2 Huntington Quadrangle, Melville, NY 11747, pages 2547 - 2547, XP093096689, ISSN: 0001-4966, DOI: 10.1121/1.4808713

## Description

### Technical Field

The present disclosure relates to a computerized system and method for marine mammal detection, to a user interface and to a method of training a model for marine mammal detection.

### Background

Many marine activities involve underwater sound emissions. These may be produced as a by-product of the activity (e.g. piling or explosives), or intentionally for sensing (e.g. air guns used for seismic surveys in oil and gas exploration, or military/commercial sonar). Marine mammals can be sensitive to sound underwater and this leads to concerns that they might be physically affected or their hearing might be affected if they are exposed to high levels of sound. One strategy for mitigating against these risks is to monitor for animals within a zone of influence and either delay or shut down noise producing operations if sensitive animals are detected within this zone.

One method for detecting marine mammals at sea is visual observations. However, marine mammals can be difficult to spot on the sea surface, especially when weather and light conditions are poor, and these techniques may only be viable during daylight hours.

Many marine mammals can produce loud and distinctive vocalizations, which can be used for detection in so-called Passive Acoustic Monitoring techniques. Compared with visual techniques, acoustic methods may have the advantages of: greater range, that the animal does not need to be at the surface, that the method may be less affected by weather and sighting conditions, or that animals can be detected acoustically equally well day and night, or any combination thereof.

Currently, PAM methods may rely on human operators monitoring the audio feed and/or using computerized tools to help them analyze the audio feed. However, marine mammal may vocalize over a wide range of frequencies and can extend beyond human hearing ranges. For instance, blue whales may produce infrasonic vocalizations below the lower bound of human sensitivity while harbor porpoise may produce narrow band pulses in the high ultrasonic above the higher bound of human hearing. Relying on human operators may also introduce an element of subjectivity leading to a lack of consistency and accuracy, as well as possibly being expensive in terms of the human resources required.

Various techniques for monitoring marine mammal sounds are disclosed in the following:
KOWARSKI KATIE A ET AL, "Near real-time marine mammal monitoring from gliders: Practical challenges, system development, and management implications", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 148, no. 3, doi:10.1121/10.0001811, ISSN 0001-4966, (20200908), pages 1215 - 1230;
BERGLER CHRISTIAN ET AL, "ORCA-SPOT: An Automatic Killer Whale Sound Detection Toolkit Using Deep Learning", SCIENTIFIC REPORTS, vol. 9, no. 1, doi:10.1038/s41598-019-47335-w, (20190729), URL: https://www.nature.com/articles/s41598-019-47335-w,
Mac Jamie, "PAMGuard_DeepLearningSegmenter/deep_learning_help.md at master . macster110/PAMGuard_DeepLearningSegmenter . GitHub", (20211005), URL: https://aithub.com/macster110/PAMGuard DeepLearningSegmenter/blob/master/deep le arning help.md;
PETER J DUGAN ET AL, "North Atlantic Right Whale acoustic signal processing: Part I. comparison of machine learning recognition algorithms", APPLICATIONS AND TECHNOLOGY CONFERENCE (LISAT), 2010 LONG ISLAND SYSTEMS, IEEE, PISCATAWAY, NJ, USA,
LU TAO ET AL, "Detection and classification of marine mammal sounds using AlexNet with transfer learning", ECOLOGICAL INFORMATICS, ELSEVIER, AMSTERDAM, NL, vol. 62, doi:10.1016/J.ECOINF.2021.101277, ISSN 1574-9541.

### Summary of Disclosure

The present invention is defined in the appended independent claims 1 and 13.

The current disclosure relates to a computerized system and method for marine mammal detection and to a user interface and to a method of training a model for marine mammal detection. In some embodiments, the marine mammals can be cetaceans (e.g., a species of aquatic mammals that can include whales, dolphins and porpoises).

Embodiments disclosed herein can detect marine mammal vocalizations via underwater acoustic signals. The system can include components including:
- Machine learning models for marine mammal acoustic detection
- Front-end interface to serve and record/store detections

The system can include: appropriate hardware for underwater acoustic signal acquisition (e.g. detected by hydrophones on board a vessel or positioned on the seabed or fixed at any other desired position), and computer hardware to execute the machine learning software and host the user interface.

According to an aspect of the disclosure, a computer implemented method of detecting marine mammals can be provided, the method comprising any combination of the following:
receiving acoustic data from one or more hydrophones;
sampling the acoustic data and transforming the sampled acoustic data to time-frequency image data;
processing the image data to transform the data to be suitable for input to a model;
input the transformed input data to at least one model trained to detect the presence or absence of marine mammal vocalizations in the acoustic data, wherein the model automatically outputs a prediction of whether or not a mammal is present; and
providing output to a user indicating the prediction.

The hydrophones may be onboard vessels (e.g. vessels conducting seismic surveying or participating in other acoustic noise generating activities off shore). The hydrophone array can be different from any acoustic sensors involved with the noise generating activities and can be tailored to picking up the frequencies associated with cetacean sounds.

Some prior art schemes can concentrate on narrow species of mammals, e.g. right whales, and particular vocalizations. Such schemes may only consider a very narrow frequency domain, e.g. as little as 10Hz to 2kHz. Some prior art schemes also may concentrate on data captured by relatively stationary offshore objects.

Prior art examples can include , e.g. "Auto-buoy", a project undertaken by Woods Hole Oceanographic Institution (WHOI) and the Bioacoustics Research Program (BRP) at the Cornell Lab of Ornithology. In some prior art schemes a series of buoys can comprise on-board real-time systems that can listen for right whale upcalls and/or can transmit calls for expert analysis via satellite. In this environment, the background may be very calm, with the occasional anthropogenic noise. Embodiments may perform marine mammal detection over a wide range of species of cetaceans, encompassing whales, dolphins and/or porpoises, and may use data for training the models which can be incredibly noisy, with powerful seismic airgun explosions, distribution noises and vibrations from the vessel (e.g., damaged propellors), unexpected electrical interferences, etc. In many instances, biological vocalisations may be overlapped with these noises and may appear as large acoustic artefacts on the spectrograms. While embodiments may apply tonal noise reduction and may smother the model with difficult examples, the feature maps within the network can learn to identify and adequately weigh the biological artefacts.

The time-frequency image data may be a visual representation of the spectrum of frequencies of the acoustic data varying with time.

The detection may be in real time or near real time, which for example, may enable alerts to be generated and sent to an operator of onboard activities to suspend those activities, or via an automatic control signal to suspend those activities due to the detected presence of marine mammals in the vicinity of the vessel.

The method may comprise inputting the prepared input data to each of two different models, respectively arranged to detect marine mammal sounds or vocalizations in different frequency ranges corresponding respectively to different mammal sounds or vocalizations. First image data may be produced for mid frequency ranges and second image data may be produced for low frequency ranges by down sampling the acoustic data for the first image data at a mid-frequency rate and down sampling the acoustic data for the second image data at a low-frequency rate. Different Fourier transform properties may be used to transform the sample acoustic data to image data for the first image and the second image comprising at least the number of samples of acoustic data used in each Fourier transformation.

In some aspects of the disclosure, different preprocessing steps may be used to generate different image data that are appropriate for the different models/frequency ranges to give more accurate results. For example, tonal noise reduction can be applied to the image data. Thus, some embodiments may be better suited to deal with "real world" noisy data, e.g. derived from hydrophones on vessels where engine noise, acoustic gun noise, etc is likely to be present alongside any marine mammal vocalisations. The tonal noise filter can reduce the effects of these sources of noise so that the models are better able to "see" the biological sounds in the image data to learn/predict. In contrast, in some prior art, an academic approach may only considers relatively "clean" data, e.g. from buoys, where less background noise is expected. This approach may be difficult to apply to a real-world application to lead to useful predictions.

In embodiments, the transformed first image data can be provided to the first model in successive first windows of a first time duration and the transformed second image data can be provided to the second model in successive second windows of a second time duration, wherein the first time duration is different from the second time duration.

In embodiments, the downsampled mid-frequency image data can be 0 to 24kHz +- 25% and the downsampled low-frequency image data can be 0 to 1.5kHz +-25%.

In some embodiments, at least a first model can be a neural network iteratively trained to classify the mid frequency acoustic data on training set data comprising acoustic samples and label data indicating whether or not the sound or vocalization of a marine mammal is present in the sample. The training data can comprises positive examples of marine mammal vocalisations and negative examples of other noise, including boat noise and/or onboard operation noise, such as cavitation, boat engine noise, propeller wash bubbles, echo-sounding operations, and construction noise and any combination thereof. This can help the models learn to distinguish between the various sources of noise to which they are exposed in a typically noisy working on board environment.

In embodiments, the neural network can use one or more machine learning algorithms to learn and converge on a solution.

In an embodiment, processing the image data can include one or more of:
resizing the image data to suit model input requirements;
applying tonal noise reduction to the image data; and
standardizing the image data to zero mean and unit variance.

In an embodiment, the method can comprise splitting the input data into at least training data and test data, which can comprise training the model on the training data and/or testing the data on the test data to determine acceptable performance of the model.

In an embodiment, the neural network can comprise plural layers including at least one pooling layer before at least one convolution layer.

In an embodiment, the method can comprise further splitting the input data into validation data, wherein the validation data can be used to tune hyperparameters of the model.

In an embodiment, at least a second model can be a rule based approach operating on features extracted from the image data applied to low frequency acoustic data.

In an embodiment, the first model can be arranged to detect at least dolphin sounds and the second model can be arranged to detect at least whale sounds.

In an embodiment, processing the image data can include one or more of:
resizing the image data to suit model input requirements;
applying tonal noise reduction to the image data; and
filtering the spectrogram to expose acoustic artifacts.

In an embodiment, the method comprising:
extracting at least one acoustic artifact in the image data;
generating a plurality of features from the artifact; and
using a rules based classifier to infer whether a marine mammal is present.

The rules based classifier may be a tree based classifier.

In an embodiment, the method can comprise drawing a bounding box around the acoustic artifact, wherein the plurality of features can include one or more of:
a. spatial position, including one or more of centroid, minimum x, minimum y, maximum x, maximum y positions, wherein x position in the time axis and y is the position in the frequency axis.
b. percentage coverage in relative to its bounding box and the whole image.

In an embodiment, the method can comprise standardizing the features using a pre-trained scaler. In an embodiment, the image data can be a power spectrogram obtained using a Short-Time Fourier Transform. In an embodiment, the output classification can distinguish between biological sources and non-biological sources. In an embodiment, the output classification can distinguish between groups of marine mammals, including whales and delphinids and/or between species.

In an embodiment, a high frequency model may be trained and used to predict the presence of vocalizations, e.g. echolocation clicks, in the audio data. Features may be extracted from the audio data suitable for predicting echolocation clicks from the audio domain or the frequency (e.g. spectrogram) domain or a combination of these. Optionally unsupervised learning may be used to cluster the training audio data into clusters representing biological and non-biological sounds, which may then be validated by an expert. The training data once validated can then be used to train a machine learning model to predict echolocation clicks in audio data based on the extracted features. The high frequency model may be in addition to or as an alternative to either or both of the low and mid frequency models.

In an embodiment, the method can comprise using a sliding window of plural time slices of audio data as input to the models. The audio samples may be fed to the pipeline in real time for real time detection. The method may comprise performing prediction pooling on plural successive windows such that plural positive detections output from the model are required for an overall positive detection. For instance, a 2 second window may be advanced in 0.5 second intervals, meaning that a noise signature possibly indicative of a biological sound present in the sample can be contained in more than one window input to the model, e.g. the signature moves across the window in successive inputs. The model may have more uncertainty in its predictions where the signature is close to the edge of the window, as context which may help the model determine whether or not is of a biological source is lost at the edges. Thus the model may predict a sound at the edge of the window is biological, but as the sample progresses in the window, the model can predict with increased confidence that the sound is not biological. By pooling multiple model outputs, e.g. aggregating the predictions, in order to arrive at an overall positive determination, false positives may be reduced For instance, where the model outputs a confidence score which is compared with a threshold, the model output may be required to be maintained above the threshold for a predetermined number of successive windows. Alternatively, an average may be taken, optionally with more weight being given to the central samples. The prediction pooling step can be thought of as an additional step in the model pipeline.

In an embodiment, the method can comprise standardization of labeling as part of the data preparation, wherein source data comprises audio files and metadata files, and the method comprising identifying samples within the audio files, associating each sample with a metadata file, and recursively extracting standardized metadata from the file to associate with the audio sample.

In an embodiment, the method can comprise recursively parsing each metadata file and matching metadata with candidate data using machine learning according to predefined rules, developing a score of how successful the current rules are in matching data, and recursively altering the rules and repeating the matching process until a predetermined threshold level of success has been met.

In an embodiment, the method can comprise automatically or in response to accepting user input, ceasing at least one on board marine activity if the prediction indicates the presence of a marine mammal. In an embodiment, the acoustic data and/or image data and prediction can be displayed to a user for validation. In an embodiment, the method can comprise receiving user input indicating validation of the prediction, wherein the user validation can override the decision to cease the marine seismic activity.

In an embodiment, the model can be implemented by a computing device on board a vessel from which the hydrophone measurements are taken and the output to a user for validation can comprise communicating the data to a remote user over a communication network. The method can further comprise receiving the validation back at the computing device for display to a user.

In an embodiment, the method can comprise adding the validated data to training data for refining the model.

In an embodiment, the method can comprise training the model by one or more of:
receiving input data from hydrophone sensors comprising detected sounds in a marine environment;
extracting audio samples of the input data and labelling with whether or not a marine mammal sound is present in the sample;
transforming the audio samples to image data to form a training data set of labelled image data; and
recursively training a model arranged to provide an output prediction of whether or not a marine mammal sound is present in the input image data on the training data to minimize an error function between the predicted output and labeled data.

According to another aspect of the disclosure, a system can be provided for detection of marine mammals, the system can comprise one or more of:
a processing device and memory holding processor executable instructions cause the processing device to carry out the method described above, the system further comprising:
an input interface configured to receive as input acoustic data from one or more hydrophones;
a transformation module to sample the acoustic data and transform the sampled acoustic data to time-frequency image data;
a preprocessing module to transform the image data to be suitable for input to a model;
a model module trained to detect the presence or absence of marine mammal vocalizations in the acoustic data; and,
an output interface to cause a prediction of whether or not a marine mammal is present to be displayed to a user by a display device or communicated to a remote user.

According to yet another aspect of the disclosure, a user interface can be provided for a computerized system for use with the method described above in detecting marine mammals. The user interface can comprise one or more of:
a first display portion showing a spectrogram of a portion of the transformed input data;
a second display portion showing a first output from a first model arranged to show an output probability of the portion representing the sound of a marine mammal;
   and/or
a third display portion showing a second output from a second model arranged to show an output probability of the portion representing the sound of another marine mammal.

According to yet another aspect of the disclosure, a method of training a model for detecting marine mammals can be provided, the method can comprise one or more of:
receiving input data from hydrophone sensors comprising detected sounds in a marine environment;
extracting audio samples of the input data and labelling with whether or not a marine mammal sound is present in the sample;
transforming the audio samples to image data to form a training data set of labelled image data; and
recursively training a model arranged to provide an output prediction of whether or not a marine mammal sound is present in the input image data on the training data to minimize an error function between the predicted output and labeled data. The current disclosure discusses methods that may improve detection and or classification of the marine mammals and may: reduce or eliminate the subjectivity of purely human based approaches, reduce false positives, reducing the human resources required, reduce delay in real time monitoring, or potentially leverage additional data cues that are not available to human operators, or any combination thereof. Other benefits are also possible.

### Detailed description of drawings

Embodiments of the disclosure will now be described by way of example with reference to the accompanying drawings, in which:
Figure 1 shows an example marine environment and an example of a system for monitoring and detecting marine mammals in that environment according to an embodiment;
Figure 2 shows elements of an example of a computerized system for carrying out some or all of an example method;
Figure 3 shows an example of a process for performing marine mammal detection according to an embodiment;
Figure 4 shows an example process for processing and standardizing source data files for training detection models;
Figure 5 shows examples of confusion matrices;
Figure 6A shows an example general view of a model for detecting marine mammals based on input sound samples and Figure 6B shows an example general view of training the model;
Figures 7 and 8 show examples of spectrograms of marine mammal vocalizations;
Figure 9 shows an example of a convolutional neural network model suitable for detecting marine mammal vocalizations in an embodiment;
Figures 10A and 10B shows another example of detecting marine mammal vocalizations;
Figures 11 to 18 show examples of screens and pop-up windows as part of a user interface; and
Figure 19 shows an example of results pooling.

### Detailed description

Embodiments of the disclosure provide a marine mammal detection system that uses advanced technologies including machine learning in particular to detect the presence of a marine mammal through acoustic events. The resulting system may be used in operations to support PAM operators and improve rate and accuracy of detection, thus improving mitigation and ensuring offshore activities do not impact the marine mammal population.

Objects of embodiments of the disclosure can include:-
Develop a system than can accurately and reliably detect the presence of a marine mammal through vocalization;
The system may be highly capable and statistically robust in differentiating between marine mammal vocals/calls, non-biological sources of noise and ambient noise;
Model(s) may learn high-level presentations that can generalize to additional species; and
Handling of recordings with multiple vocalizing mammals (e.g. Dolphin pods, mixed whales and dolphins etc.) may be done.

It will be appreciated that any features expressed herein as being provided "in one example" or "in an embodiment" or as being "preferable" may be provided in combination with any one or more other such features together with any one or more of the aspects of the present invention.

### System

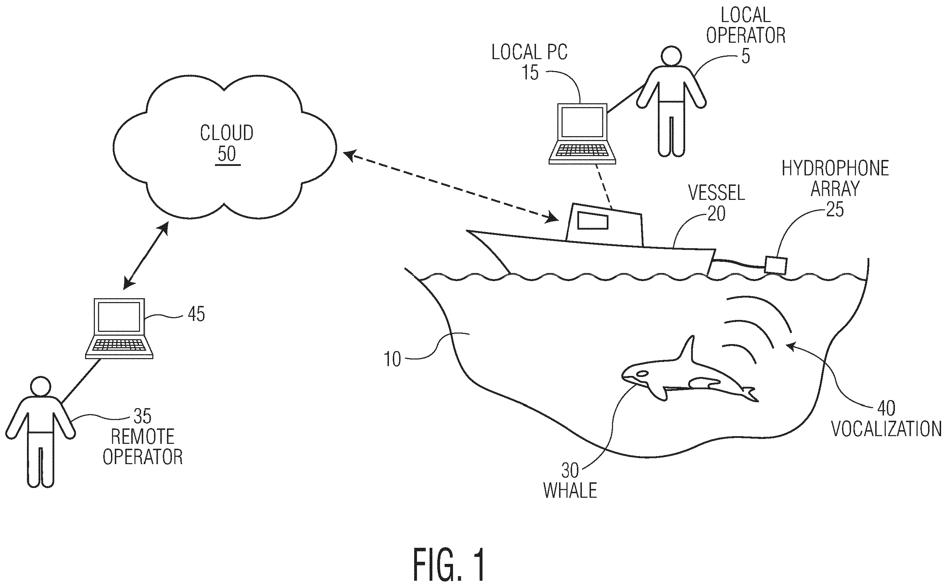

Figure 1 shows an example of a system for detection of marine mammals. A computing device 100 is set up on board a vessel 20 operating in a marine environment 10 in which marine mammals 30 are to be detected. The vessel may tow a hydrophone array 25 which detects acoustics 40 in the marine environment 10 and may send sound packets of continuous data to the computing device 100.

The vessel may also be engaged in onboard activities that generate acoustic noise, such as seismic surveying as described above. In such activities, the vessel may also tow a sound wave source and acoustic receivers (sometimes known as streamers) (not specifically shown). These acoustic receivers may be separate from and/or of a different type from the hydrophone array 25 used to detect marine mammals, e.g. tailored to the different sounds required to be detected by each application. In other activities that generate noise, such as piling, there may be no further acoustic receivers other than the hydrophone array 25.

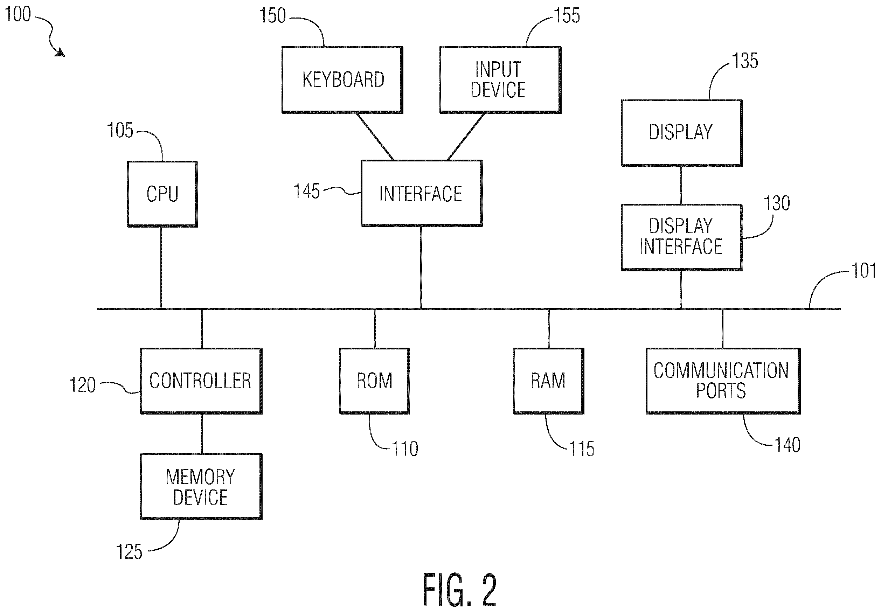

Figure 2 shows in more detail the computing device 100 of Figure 1, comprises a processing device 101 and memory 102 in communication over a bus 106. The memory 102 stores a computer program which when executed by the processing device implements the marine mammal detection model as well as working memory. The computing device may also have a store 107 for storing a database of acoustic samples. The computing device 101 may also comprise a communication interface 103, for example for communicating with a cloud server, a soundcard or other sensor I/O interface 110, for receiving data from the hydrophone array 25, a User Input interface, e.g. for receiving input from a user via a keyboard and mouse, and a display output interface 104 for displaying output to the user.

The computer program may comprise a frontend where the user can opt to create a project. This project may be accompanied by a database stored in the memory where subsequently received marine mammal acoustic detections may be stored automatically. A front-end component allows the user to validate the samples and add additional, valuable metadata.

It will be appreciated however that in other embodiments the model may be executed by computing devices not local to the vessel 20, such as in the cloud 120 or a remote computer 130, e.g. using a satellite communication link to transmit data to and from the vessel. Similarly, other sensors than a hydrophone or hydrophone array may be used to detect vocalizations.

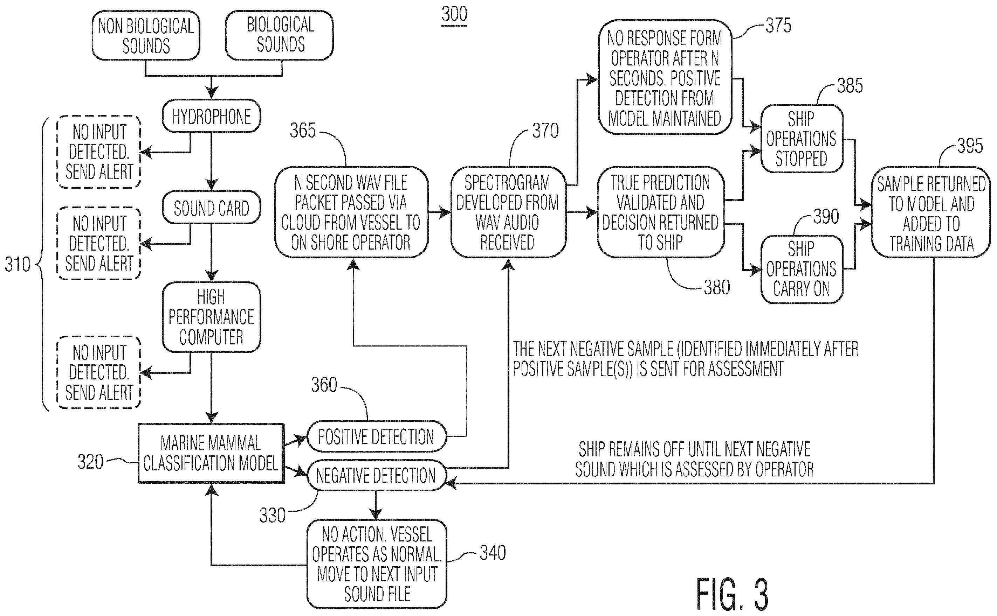

Figure 3 shows a possible sequence of operation 300 in more detail. In this sequence, the software runs automatically on board the vessel 20 determining whether or not a marine mammal 30 is detected in the acoustic input data and flagging a decision of whether or not to suspect operations of the vessel, together with on-shore validation of the decision by a remote operator. The model 320 may receive sounds from the hydrophone array in steps 310 (as described above). The program may generate alerts to the operator 5 if there is no input detected by the hydrophone, the sound cards or the computing device. The marine mammal classification models may infer the presence of a marine mammal vocalization. If there is no sound 330, the model will not use alarm 340.

If there is a sound 360, this sound file may be transferred 365 over a suitable communication network, e.g. cloud network 120, to a remote computer 130 or cloud computer, where the on-shore PAM operator can assess the issue and make a decision.

This may be done in real time or near real time. Individual operators may receive feeds from individual vessels. Alternatively, the operator may receive feeds from plural vessels and so a single operator may validate decisions made in respect of plural vessels, leading to a significant reduction in operator-hours needed to run the system.

In the case of the model making a positive detection, this may be communicated to a remote computing device 130 or a cloud server via a communication link and validated by a remote operator 135. For instance, a two second packet of audio may be received on shore by the operator. Their on-shore system 135 may create the spectrogram from the 2 sec audio packet they have received. The PAM operator may make their own decision based on both the sound and visual data presented to them of whether there a marine mammal present, e.g. validate the decision made by the model.

Their decision may be returned 380 to computing device on the vessel via the communication network. The operation of the ship is suspended or not, e.g. ship signal/noise turned off 385 or kept on 390 depending on the decision. This might be automatic or the decision displayed to the local operator 5 who implements the necessary actions. The PAM operator decision may be given greater weight than the model decision and allowed to override it.

The remote operator 135 may also labels the audio sample, e.g. with presence or not of marine mammal and optionally type of marine mammal. Having been labelled, these assessed samples may be returned to the project database 395 to become additional data for updating the model(s) via the continuous improvement life-cycle. High-quality labeled data may be helpful to machine learning, and so iteratively improving the data may allow the model performance to quickly improve (without necessarily changing the model hyperparameters), e.g. using a data-centric approach to continually improving the model.

In the case of the model making a negative detection (False positive), the PAM operator may return their response of no marine mammal detected. The false positive sample may be maintained in the database records. The ship's operation may continue to run as normal. Optionally, the operator may assess the next n number of audio samples, to help ensure they have made an accurate decision.

In the case of the model missing a detection (False negative), then the operator may have the facility via front-end tools to capture the audio snippet, create a sample in the database and complete the necessary metadata. Again, this may be logged appropriately in the database as a false negative (missed sample) to help ensure subsequent model calibrations are focused on improving detection.

Optionally, a persistence may be set on each positive detection before the next packet can be assessed based on assessing the average length of call. For example, if the average Dolphin sound is 3 seconds, keep the ship off and send no further assessment samples until N seconds after the last call.

If there is no response from an operator, the model decision may be acted on as the Marine Mammal model has high levels of accuracy. After N seconds of no response, the model may flag the action to the ship.

Other validation checks may be implemented. For instance, the software may track: when was the last validation sample sent and received; what is the average length of time currently, between pods of Dolphins or Whales; or has there been any validation samples sent to/between the ship and PAM operator in this length of time, and if not, investigate possible reasons (for instance, is there an issue with signals and/or equipment?; or any combination thereof. Other validation checks may also be used.

If there is no signal/audio from the hydrophones in N amount of seconds, this may be immediately flagged by the operator as they could be missing marine mammal sounds.

### Data understanding and gathering for modelling

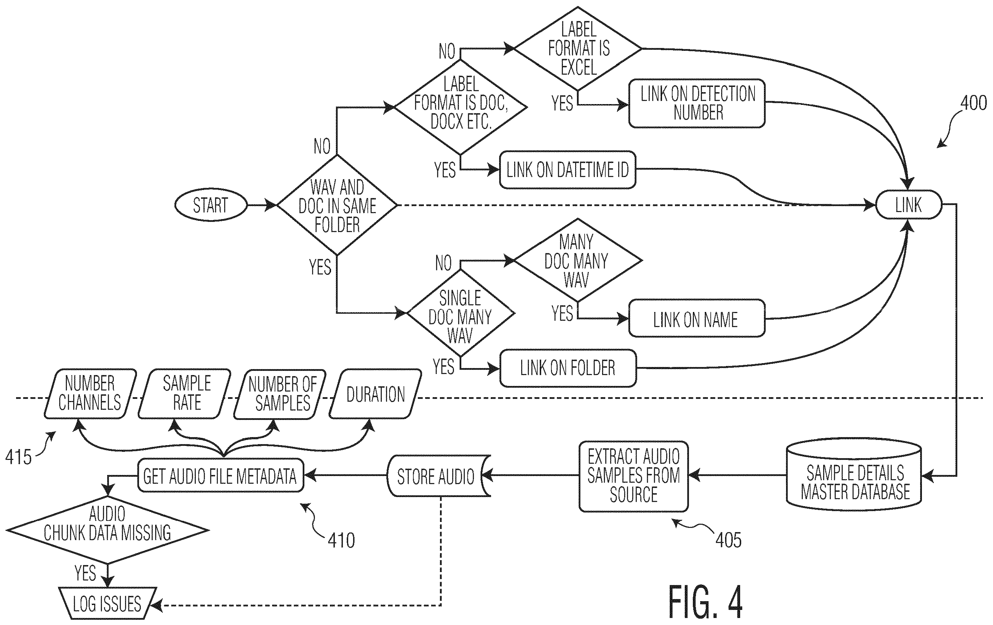

A challenge with using artificial intelligence to detect marine mammal vocalizations may be the disparate sources and structures of data of previous detections from which the Al is expected to learn. Accordingly, initial steps may be: understanding and preprocessing the data to standardize its form; and putting it in a suitable format to support data science and machine learning experiments, as shown by Figure 4.

In particular, the audio data made available for the development of the models may originate from historical seismic surveys, potentially together with metadata files generated by human operators which attempt to classify the vocalization and give additional detail.

Shared files may include:
- Thousands of wave files (both with and without positive detections) and/or examples of electrical interference and anthropogenic noise.
- Documents and/or other unstructured data sources containing detection details and metadata

Due to the variation of file storage techniques (between exploration projects, operators, and data storage protocols), a relatively complex task of data exploration and understanding may be conducted. This activity may aim to decipher as much data as necessary from the folder structures, and/or help ensure audio detection samples are matched with the correct metadata file, and support initial data analyses.

The relationship between detection documents and audio file may be one to many (e.g., one document can be considered metadata for many audio files).

Audio files may be variable in length, source vessel, operator, etc. amongst other mainly categorical variables. The vocalization may be present in only a small part of the audio file, or multiple vocalizations being present of the same or different types at different times in the audio file. The input files may also contain QAQC (quality assurance quality control) audio, such as other sounds that can be expected to be picked up in the operating field, such as marine diesel engines, etc. which may also be presented to models for training purposes to help it learn to distinguish between it and marine mammal vocalization.

The "metadata" associated with the audio file may also vary in that some operators may classify as whale or dolphin, and others may attempt to identify individual species of mammal. Some may use different nomenclature, e.g. dolphin, delphinid, etc. for the same thing, and many files may include human-produced error in terminology and spelling.

To address these technical problems, the data exploration and understanding stages, combined with the volume of data may show a need to automate the extraction of audio data along with respective metadata documents. Custom code constructs may be developed to recursively dive through the directories, select audio files, use file naming conventions and timestamps to link metadata, etc., as shown by Figure 4 step 400.

Furthermore, the metadata files (typically word processing files of various types such as .doc, .docx, .odf, .rtf) may require dynamic approaches and use of machine learning techniques to review and extract key information into a structured format. The machine learning component may be adopted to help account for inconsistencies in the document data and may rather use similarity distance measuring to match specific values to a predefined schema.

Where the similarity distance measure is below an acceptable threshold, then the associated value may not be accepted (since it has likely matched the incorrect schema key). Matches at or above the similarity threshold may be accepted.

The outputs of metadata may then be further reviewed by data scientists to help ensure the values are within a defined range of possible, appropriate values. At times, it may be necessary to review the documents manually and potentially remove the record of metadata and all audio samples due to high uncertainty.

Figure 4 shows an example process for extracting the information from the source metadata files and creating a one-to-one correspondence with the audio samples.

This data extraction and collection process may lead to the development of a preliminary audio sample and metadata database for review and analysis as shown by steps 405,410 in Figure 4.

The results may take the form of a database of semi-structured data comprising entries which may include: 1) the sample identifier, 2) whether or not a marine mammal is present, 3) the category of the sound, e.g., group of marine mammal (dolphin/whale) or QAQC, 4) species of marine mammal (if known); 5) details of the state of the sea and hydrophone set up, or 6) audio sample properties; or any combination thereof.

Analysis of the audio detection samples, and respective metadata may reveal high variability in the quality of audio data, length of recordings, number of channels etc., at step 415. Additionally, there may be no indication or detail relating to the exact timestamp of a marine mammal vocalization within any audio detection sample. Some of the audio samples may be very long and may or may not contain any marine mammal vocalization. Consequently, there may be an obvious need to investigate data, and more importantly, metadata quality.

### Quality assessment

Optionally, at this stage, the audio data can be reviewed by a bio-acoustician to provide validation labels. This might provide additional data concerning the order/species, the type of vocalization (e.g. click/whistles/moans, or combinations thereof). Additional data may be included as to a confidence rating of the classification (which can be used to dispense with marginal identifications), and precise start and end times of the vocalization within the sample.

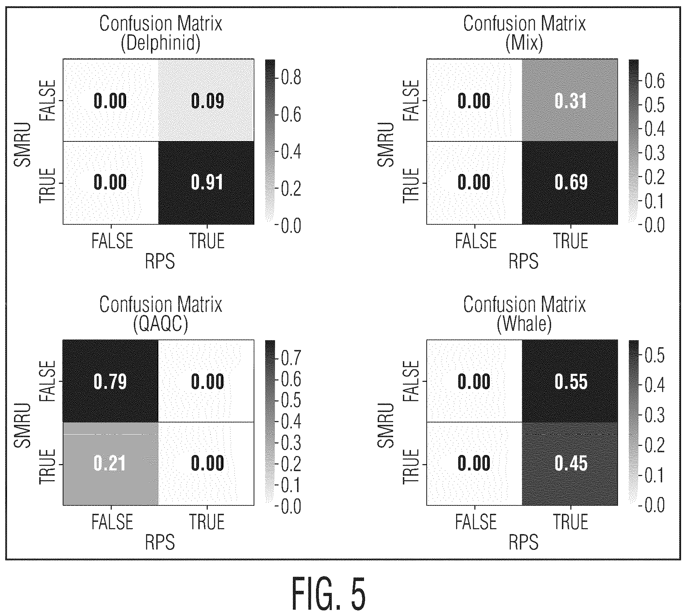

The existing metadata and reviewed metadata can be compared at this stage to determine the confidence level in the accuracy of the data. Figure 5 shows "confusion matrices" for various types of source sound showing a good level of agreement of the metadata, indicating good confidence in the accuracy of the data. It may also reveal audio samples where no vocalizations are present, which can occur due to human error (e.g., incorrect decision, forgetting or accidentally pressing record, operator starting and stopping recording during and between vocalizations).

### Data Annotation

This analysis may result in a conclusion that the data needs strong annotations (e.g., rather than an audio file; of arbitrary length, being regarded as a positive sample, the ability to calibrate models relies on samples that are focused on the vocal signal. Hence, any audio sample could contain zero or more vocalizations and thus, the start and end time (as well as frequency and assumed mammal group) may be annotated appropriately).

Higher quality annotations and representative data may provide the best opportunity to calibrate machine learning models. The annotations may form a representation of what class of objects the data belongs to and may help a machine learning model learn to identify that particular class of objects when encountered in unseen data.

In one example case, batches of 1000 audio files may be prepared and shared with a small team of experienced passive acoustic monitoring operatives.

Use of open source software (Audacity https://www.audacityteam.org/) may be used to annotate the audio files from scratch and generate annotation files.

Each annotation record may provide the start, end, min and max frequency as well as D for "Dolphin", "W" for "Whale" and "NO" for non-biological.

### Training data preparation

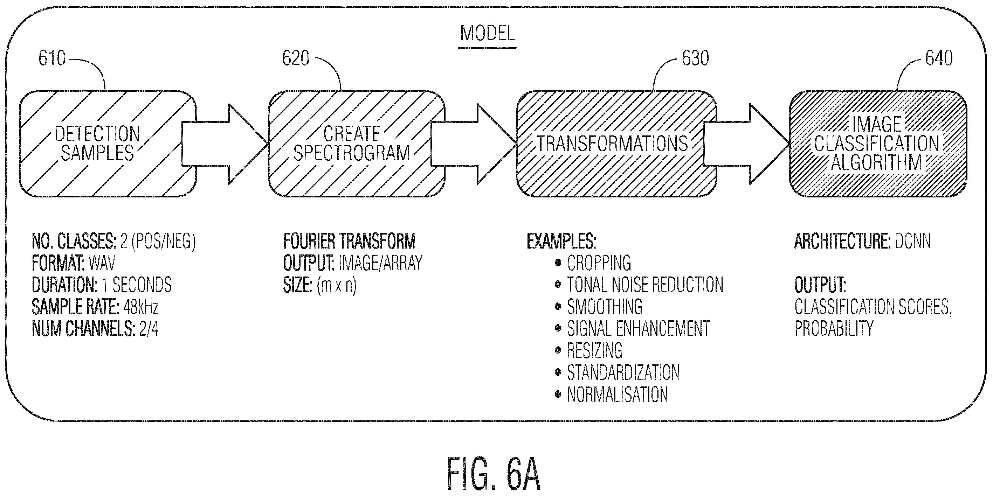

As shown by Figure 6A, at step 610, detection samples may be prepared from the database of source sounds. As described above, each source file, e.g. 10 minutes of audio, may contain multiple sounds, e.g. 20 or more. The samples for each sound may be extracted with reference to the metadata. For each positive sound sample, a negative sample may be automatically also obtained from the same source audio file to balance the training inputs to the model.

The output of this process are thousands of small audio .wav files (both positive and negative samples) with unique global identification as the filename, further suffixed with 1 or 0 to indicate a positive or negative sample respectively. A link may be maintained between the sample name and its parent audio file, allowing for traceability and further cohort analysis based on factors such as vessel name, operator name, sea state, etc.

### Training pipeline

The pipeline is designed to closely reflect deployment scenario to minimize inconsistencies between the training code constructs and deployment code constructs. The pipeline comprises the following steps:
- Read raw audio from source file
- Perform pre-processing (multi-channel to mono waveform)
- Perform Fourier transform to obtain two-dimensional spectrogram
- Perform pre-processing on spectrogram (tonal noise reduction, scaling, cropping)
- Inference (classification)

As shown by Figure 6A, after reading the raw audio files and converting the signal to a mono waveform, at step 620, spectrograms are created for each sample. This transforms the audio data into two dimensions (here time and frequency) and allows image classification approaches to be used in detecting marine mammal vocalizations.

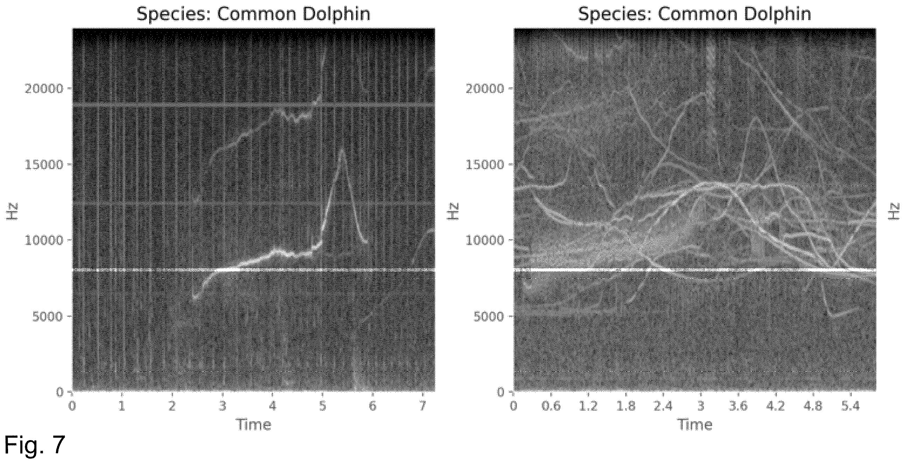

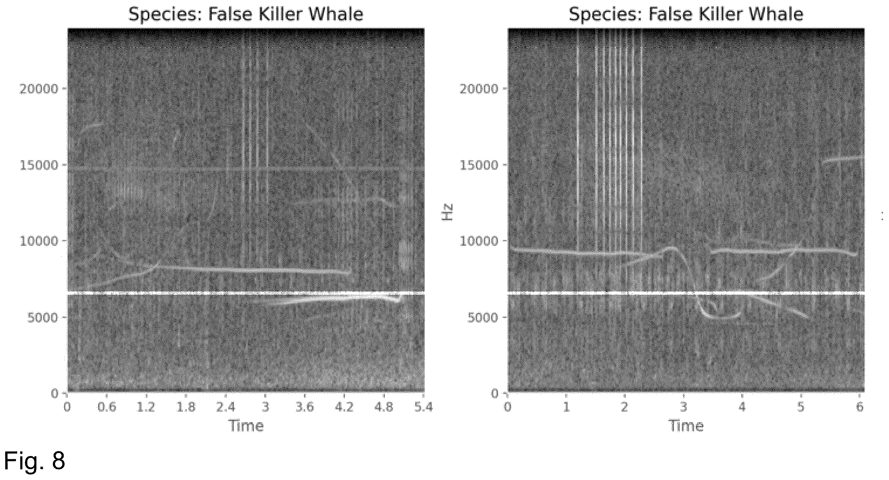

Figures 7 and 8 show examples of spectrograms for various marine mammal vocalizations. A spectrogram is a visual representation of the spectrum of frequencies of a signal as it varies with time. When applied to an audio signal, spectrograms are sometimes called sonographs, voiceprints, or voicegrams. A spectrogram can be generated by an optical spectrometer, a bank of band-pass filters, by Fourier transform or by a wavelet transform (in which case it is also known as a scaleogram or scalogram). The time-frequency representation may be a Short-time Fourier Transform or **STFT** calculated by computing a discrete Fourier transform (DFT) of a small, moving window across the duration of the window. An example format may be a graph with two geometric dimensions: one axis represents time, and the other axis represents frequency; a third dimension indicating the amplitude of a particular frequency at a particular time may be represented by the intensity or color of each point in the image. Other formats are possible.

At step 630, the spectrograms are transformed in order to help the model distinguish. Examples include cropping the image, tonal noise reduction, smoothing, signal enhancements, resizing, standardization, normalization, etc.

At step 640, the image classification algorithm is trained on the transformed visual data. For instance, a convoluted neural network model may be trained on the data to detect and/or classify sounds.

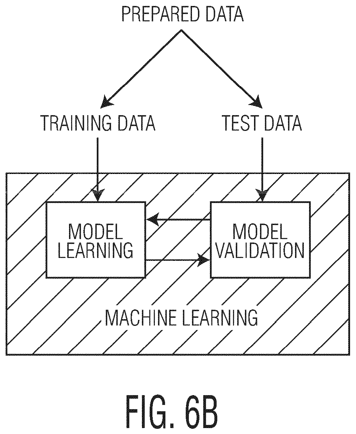

Figure 6B illustrates an example training process. The model is trained on the spectrograms to learn the general feature representations that separate background noise and other acoustic events from biological sounds. A hold-out test set may be taken from the training dataset to determine model predictive performance on un-seen data. The model may consume batches of spectrograms until the entire training dataset is fed through the network which then constitutes one epoch.

Many epochs may be set to run until the model converges. The dataset may be shuffled for every epoch to help ensure there is no undesired ordering learned, and to promote model generalization.

Model performance may be monitored both on the training data and the hold-out test set at the end of every epoch via performance metrics (loss and accuracy) which may further expose any overfitting or underfitting. Overfitting is where the model performance on the training set exceeds performance on the unseen test-set. Underfitting is where the model performance on the unseen test-set exceed that on the training set. The aim is generally to maintain a difference between the metrics of training and testing sets within an acceptable tolerance. Model checkpoints and early stopping may allow for the best model parameterization to be maintained, even if further training proceeds (which could result in a model with worse predictive performance).

As described above, the training data in this case may comprise annotated data. Supervised learning, is a type of machine learning algorithm that requires data and corresponding annotated labels to train. The typical training procedure may comprise: feeding annotated data to the machine to help the model learn, and testing the learned model on unannotated data. To find the accuracy of such a method, annotated data with hidden labels may be used in the testing stage of the algorithm. Thus, annotated data may be a necessity for training machine learning models in a supervised manner. Validation data may also be used to help tune the hyperparameters of the model. Thus, the input data set may be split into training data, validation data and test data, e.g. in the proportions 70%,15%,15%. Note that many other proportions may also be used.

The test dataset can change throughout training models in a cross-validation approach. It may be used for determining which model architecture performs best on average given different splits of train/test data. Validation data may be held-out entirely, at all times and it may be the final validation point.

The pipeline for using the model for detecting marine mammal vocalizations may follow a similar pipeline to that shown in Figure 6A, except the detected samples are real time samples without annotation and the model outputs a detection, e.g. classification of the input sample as a marine mammal vocalization or not.

The model may be configured to just detect the presence or not of a mammal through its vocalization, e.g. a binary decision to inform the vessel operator whether to continue activities or stop. Thus, the training data set, e.g. inputs to the model used for training and testing, are simply the transformed audio samples and a binary Y/N indicating whether or not a marine mammal is present. However, in other examples, it may be useful to also classify the type of mammal detected, e.g. whales or delphinids, species, etc. by allowing the model to learn to distinguish different groups or species of mammal by training the model on data that includes the mammal group or species.

In more detail, the model may use two different pipelines for identifying marine mammal vocalizations concentrating respectively on mid frequency and low frequency vocalizations.

### Mid Frequency Model

In the mid frequency model the process may proceeds as follows:-

### 1. 2 second audio is decimated to 24kHz using a sample rate of 48kHz (multichannel input)

Many Al approaches will reduce the sample rate of their input signals (called downsampling) to reduce the computational load during training time. Downsampling removes high frequency information from a signal, which may be seen as a necessary tradeoff when developing models.

### 2. Audio is converted from stereo to mono (single channel)

Similarly, it may be that the additional information contained in a stereo audio file can be dispensed with without significantly impacting the models ability to learn and predict. It may not be suitable for species classification.

3. Audio is Fourier transformed to produce the two-dimensional power(dB) spectrogram with the following typical properties:
Number Fourier transforms: 512
Hop length: 256 (number of audio samples between adjacent Fourier transform columns) Window length: 512
Window type: cosine window ('hann') (https://docs.scipy.org/doc/scipy/reference/generated/scipy.signal.windows.hann.html)

### 4. Spectrogram is resized to satisfy model input requirements without distorting the image

The two-dimensional convolutional neural network model input may require for example images with dimensions 256 X 256 X 1 (H, W, C), where the last dimension is the channel.

5. Tonal noise reduction is applied to the spectrogram. This may help the neural network distinguish the important features from the background noise.

Tonal noises may be evident in many of the audio samples and may be continuous throughout the spectrogram image. Tonal noise may be reduced or removed as a preprocessing step to avoid the model learning features corresponding to tonal noise.

6. Spectrogram is standardised to zero mean and unit variance.

The purpose of standardizing the spectrogram values is to help treat each one and their respective features fairly. Reducing the value ranges of the images may also help to increase calculation times, thus potentially leading to faster model convergence.

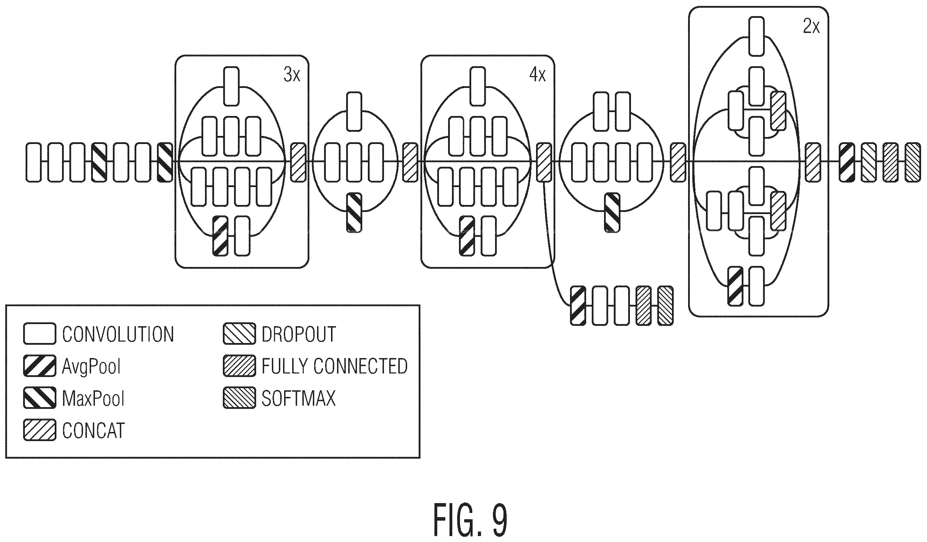

7. Spectrogram is issued to a deep convolutional neural network (e.g., Inception V3 architecture as the backbone model with global average pooling, dropout layer and final dense prediction layer.) Figure 9 shows an example of a suitable architecture.

Many model architectures now exist for image classification with varying rates of success across many applications. One such model (ResNET50) was found to result in excellent performance metrics on detecting humpback calls. Azure Machine Learning Studio was used to trial various model architectures, which led to a high performing model being the Inception V3 architecture.

In production, the software issues 2 seconds of audio every 500ms to the mid-frequency pipeline for generating a prediction. Between approx. 500ms and 700ms may give a good balance between speed and computational overhead.

The output of the pipeline is a floating-point value representing the prediction on a scale of 0-1 where a 0 represents "no detection" and 1 represents "detection". The threshold may be defaulted to, e.g., 0.75, but can be altered by the user.

### Low Frequency Model

In the low frequency model the process may proceed as follows:-

### 1. Audio is decimated to 1.5kHz using a sample rate of 3kHz (multichannel input)

This is effectively zooming into the lower frequency domain where ultra-low frequency whale calls are typically observed. It may also be the noisiest part of the spectrogram.

### 2. Audio is converted from stereo to mono (single channel)

This may be the same process as in the mid-frequency model - e.g., a mean through all samples in the audio.

3. Audio is Fourier transformed to produce the two-dimensional spectrogram. This Fourier transform algorithm parameters may differ from that of the mid-frequency and may be specific to this low frequency domain, for example.
Number Fourier transforms: 256
Window length: 256
Hop length: 8 (number of audio samples between adjacent Fourier transform columns)
Window type: cosine window ('hann')

These parameters (e.g., the number of Fourier transforms, hop length and window length) may be manually adjusted on samples with a marine mammal vocalization present. Adjusting these parameters affects the temporal and/or frequency resolution. The final set of parameters were found to best expose the vocalization on the low frequency spectrogram.

### 4. Spectrogram is resized

This is to standardise the sizes of the images without distorting them and/or to benefit from matrix/array operations which are computationally efficient.

### 5. Tonal noise reduction is applied to the spectrogram.

This may be the same process as in the mid-frequency model

### 6. Filters are applied to the spectrogram to expose acoustic artifacts

A gaussian filter is applied to help remove noise, followed by a Frangi filter (e.g., specifically for detection of continuous ridges)

### 7. Artifact blobs are isolated and labelled

An isodata threshold is applied to create a binary/Boolean image, followed by a labelling process algorithm to label each individual artifact in the image and calculate its area.

### 8. The largest artifact is extracted

Manual review of outputs at this stage lead to the conclusion that the largest artifact in the image has a much higher chance of being a marine mammal vocalisation. However, large artifacts generated by non-biological sources will may also be output. A further stage of classification may therefore be required.

9. Any combination of the following features may be generated from this artifact based, for example:
- % coverage of the artifact bounding box relative to whole image
- % of signal relative to the image
- % of signal within relative to artifact bounding box
- ratio of artifact bounding box x to whole image
- ratio of artifact bounding box y to whole image
- Aspect ratio of artifact bounding box
- Mean width of signal along y relative to artifact bounding box
- Mean width of signal along x relative to artifact bounding box
- Mid width of signal along x relative to artifact bounding box
- Mid width of signal along y relative to artifact bounding box
- Center of mass relative to image (x and y coordinate)
- Center of mass relative to artifact bounding box (x and y coordinate)

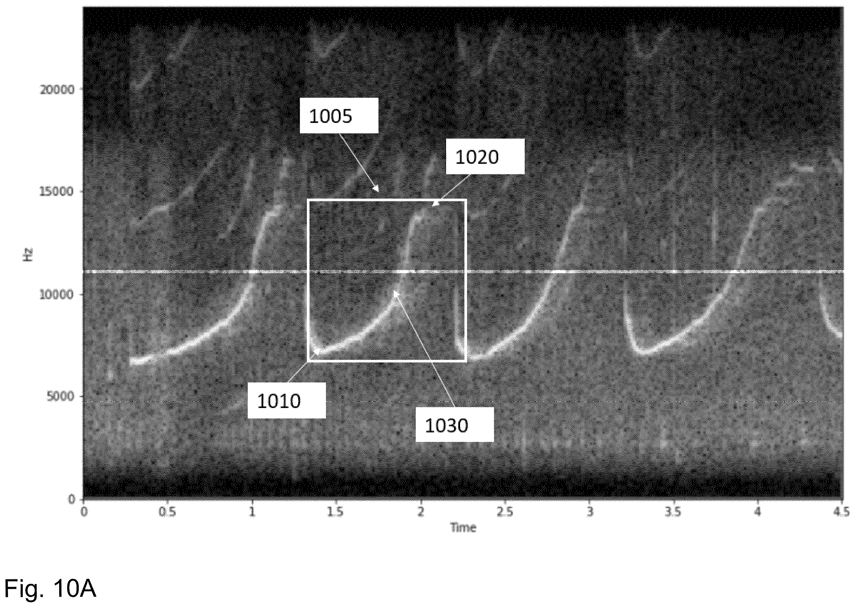

Figure 10A shows an example of a spectrogram with bounding box 1005 surrounding an artifact indicative of a marine mammal vocalization. In this example, features including centroid 1030, min x, min_y, (1010) max_x, max_y (1020) points are labelled.

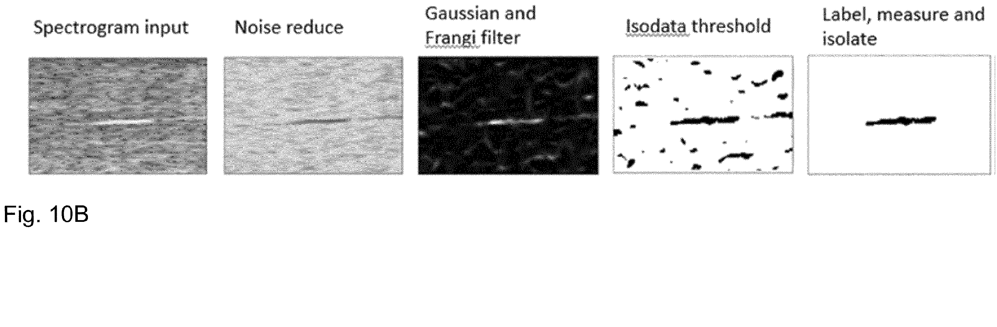

Figure 10B provides an example of a marine mammal vocalization present in the spectrogram. The process described above may lead to the extraction of the largest acoustic feature.

### 10. The features are standardised using a pre-trained scaler.

Once all features are generated for the feature, these values of the features are standardised to give all features (initially) the same weight and to help ensure features with larger magnitude do not affect model learning.

11. The scaled features are issued to a rules-based classifier for inference. Rules-based classification models, e.g. tree based classifiers, are a type of supervised machine learning algorithm that uses a series of conditional statements to partition training data into subsets. Each successive split adds some complexity to the model, which can be used to make predictions. The end result model can be visualized as a roadmap of logical tests that describes the data set.

The entire process from raw sound input to classification may be wrapped into a data processing pipeline which serves to allow further training and inference with new data.

The classification model can be automatically derived from training data by iteratively splitting the data into separate cohorts based on its features and then measuring the purity of the leaf. If it is pure, there may be no need to keep splitting it, if it is not, then the splitting may continue until convergence is reached and there are no more features to split to achieve a better performance metric.

In production, the software may issue 1 second of audio every 500ms to the low frequency pipeline for generating a prediction. Between approx. 500ms and 700ms may give a good balance between speed and computational overhead.

The output of the pipeline is a floating-point value representing the prediction on a scale of 0-1 where a 0 represents "no detection" and 1 represents "detection". The threshold may be defaulted to e.g. 0.75.

A decision tree based approach may work well with low frequency sounds and whale vocalizations and sounds in particular, and may exhibit signs of good generalization across large test sets which have been validated by marine mammal acoustic operators as the input data may contain quite a lot of noise in the low frequencies and this technique may be resistant to noise. Low frequency images may have such low resolution features that the model could not develop weights to properly converge if a neural network technique, such as used for the mid frequency model, were used. Also, ultra low frequency whale sounds may not be so complex in shape, whereas the mid frequency sounds can be very complex, undulating sounds, which is why the low frequency approach may not work in the mid range.

### High-frequency model

In some examples, a high frequency model may be employed as an alternative or in addition to the mid- and/or low-frequency models. Such a model may be targeted to detecting marine mammal echolocation clicks using high-frequency audio data and machine learning techniques.

The process may proceed using one or more of:
- Pre-processing may include one or more of: Clean and pre-process the audio data to remove background noise, filter out irrelevant frequencies, and segment the recordings into smaller time intervals that contain the echolocation clicks of interest. This step may involve techniques such as bandpass filtering, noise reduction algorithms, or signal segmentation, or any combination thereof. The pre-processing may typically focus on frequencies >100kHz, e.g. in the range 192kHz to 250kHz in one example.
- Feature Extraction: May extract relevant features from the pre-processed audio data to represent the echolocation clicks. Possible features that may be suitable for click detection include time-domain features like peak amplitude and duration, frequencydomain features like spectral centroid and bandwidth, statistical features like mean, standard deviation, or energy, or any combination thereof.
- Unsupervised classification: May use machine learning techniques to cluster acoustic artifacts into biological and non-biological categories. This model may be used to automatically label the audio recordings.
- Validation/labelling: May involve domain experts to validate the clusters/groupings produced by the unsupervised approach.
- Supervised classification: May use the labelled/validated data to train a machine learning model, such as a classification algorithm or a deep learning neural network. The model can be designed to learn the patterns and characteristics of echolocation clicks from the extracted features. This process may also allow identification of the strongest features that may be useful for prediction and reduce the complexity of the model itself. Hence, the model can be better understood rather than a complete black box.
- Model Evaluation: May assess the performance of the trained model using appropriate evaluation metrics such as accuracy, precision, recall, or F1-score, or any combination thereof. This step can help in determining the effectiveness of the model in detecting echolocation clicks accurately.
- Continuous improvement and refinement of the model may be necessary as new data becomes available or when encountering different species with distinct click characteristics.

The output of the pipeline can be a floating-point value representing the prediction on a scale of 0-1, where a 0 represents "no detection" and 1 represents "detection". The threshold may be defaulted to e.g. 0.75.

The above techniques in combination may have a high (e.g., at least an 80%) success rate in detecting marine mammal vocalizations and this may increase to 90% or more over time with sufficient high quality input data to train the models.

### User Interface

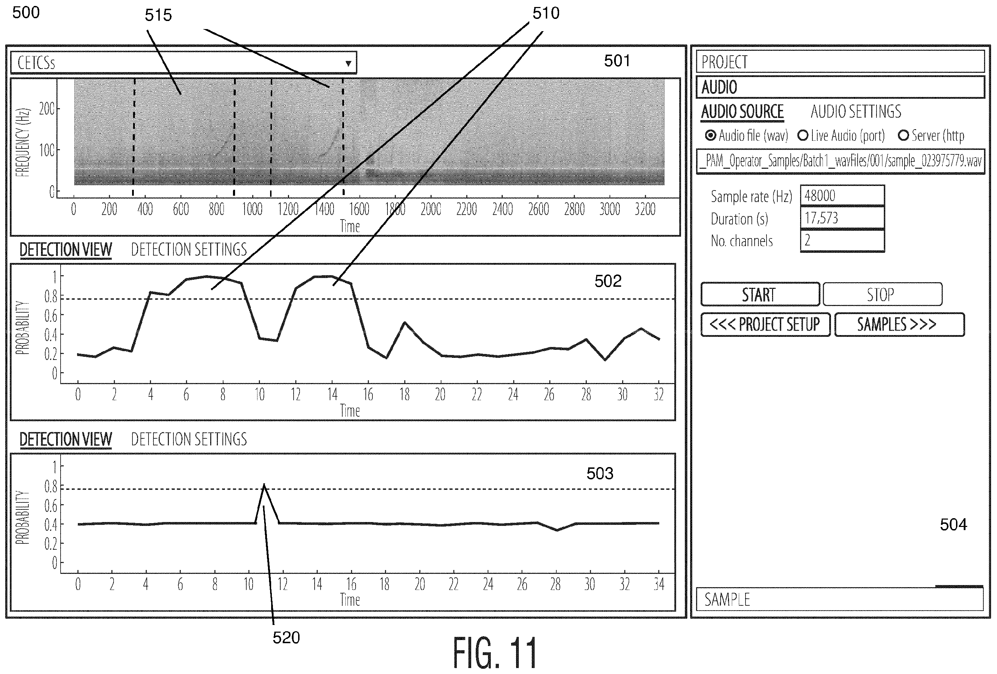

Figures 11 to 18 show examples of screens and pop-up windows as part of a user interface which may allow an operator to interact with the software system and particularly to play audio, display spectrograms, display the output of the model and validate the model predictions, as well as other functions. Figures 11 to 18 show output for the lowand mid-frequency models. It will be appreciated that the principles may be extended for any other models where implemented, e.g. the high frequency model also described herein, by showing further spectrograms and model output predictions.

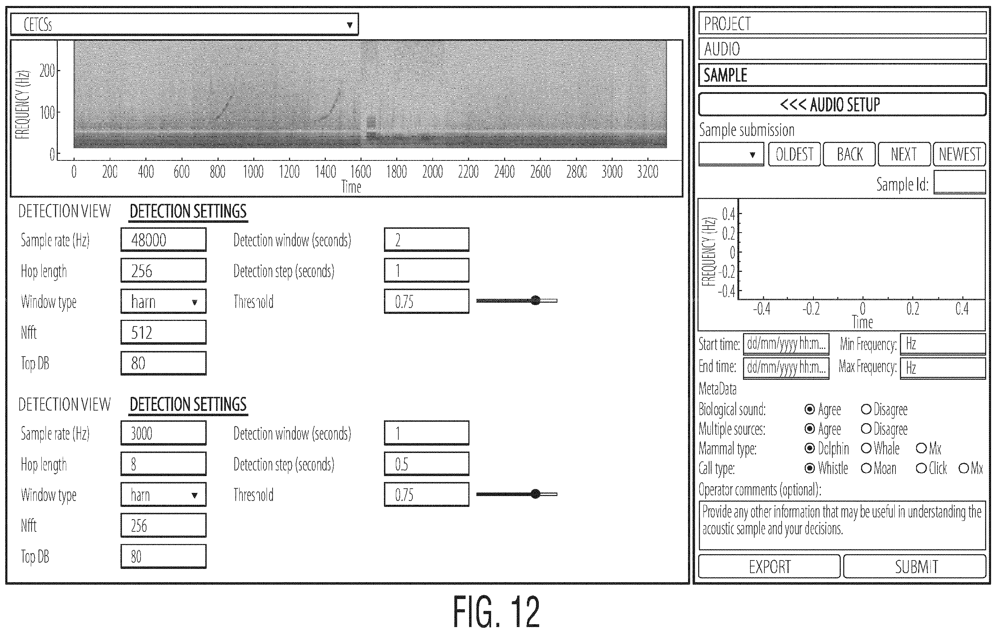

Figure 11 shows the main user interface 500 consists of a left panel and a right panel. The left panel can include a real-time spectrogram 501, the mid frequency detector 502, the low frequency detector 503, or any combination thereof. The right panel can include the user panel 504 which provides for project creation (opening and closing), audio source select, database and sample validation (collecting, viewing and validating audio recordings as shown in more detail by Figures 12 to 18), or any combination thereof. In Figure 11, a project has been created and an audio file (wav) has been selected and loaded, with its properties being displayed, e.g. sample rate, duration and number of channels.

It can be seen in this example, that the output probability for the low frequency detector (shown by the line in plot 502) peaks 510 above 0.75 (or whatever threshold has been set) at points coinciding (in some embodiments, the positive detection may slightly trail the vocalization) with the vocalizations 515 shown in the spectrogram 501, which may indicate that the low frequency model has made a positive detection. The mid frequency model output 503 may maintain a low probability output throughout.

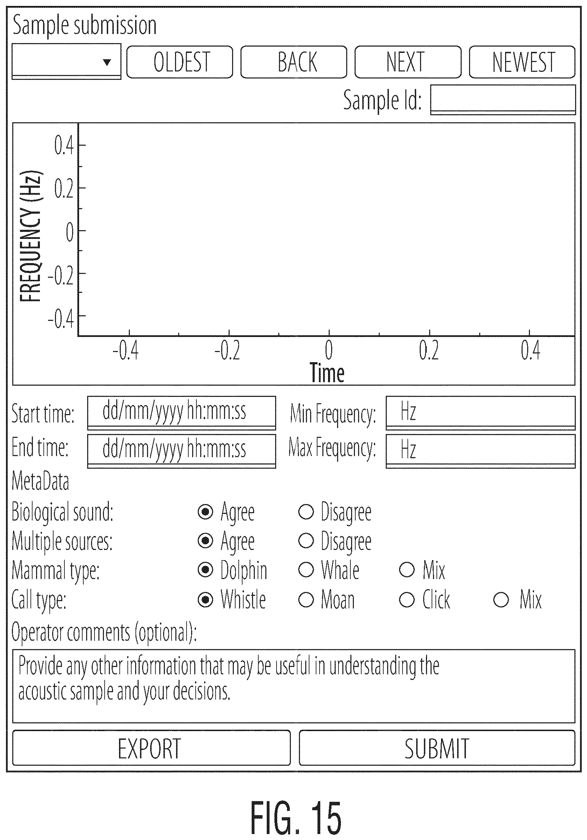

The software may automatically submit audio recordings to the project database. When this happens, these samples can be accessible via the sample interface and displayed to the user as a spectrogram, as shown in Figures 12 and 15. The raw audio waveform may be stored in the database, whereas the spectrogram may be provided as a convenience for the user to view and validate the sample. On the spectrogram background, a semitransparent box 515 may be drawn to indicate where a detection was made. The indicators can eventually roll out of view as newly process audio data becomes available.

A level of persistence may be required in order for an audio recording to be submitted to the database. Figure 11 shows an example where the indicator 515 on the spectrogram and then the trail of consecutive detection predictions 510 on the mid-frequency model which leads to a positive detection decision and the audio sample being submitted. This may be done automatically by the software, but may also be left to the operator to evaluate. When submitting a sample, the software can record the start and end time of the detection sample, and can return its min and max frequency (which can indicate the model which made the prediction, e.g. mid or low frequency).

As shown in the example in Figure 11, a detection on the low-frequency prediction 503 has peaked above the default confidence threshold. These can constitute false positives 520 since they do not persist. As a result, these detections can be filtered out and not submitted to the project database.

It may be difficult to see the artifact, but the software may offer the user the option of interactive zooming and/or panning on the live spectrogram and/or the sample interface spectrogram using for instance the mouse scroll.

Any detections made by the models may be submitted to the database autonomously. Validation of these samples can be undertaken by the user while the system is running, or it can be completed later. The sample interface can be the software component which can allow the user to navigate the samples in the database and work through validation. The sample interface can offer the user a simple form to complete for each sample, some basic metrics to understand how many samples reside in the database and how many have been validated.

After inspecting the sample the user can click 'submit' so that the decisions are tagged to the sample. Alternatively, the user can choose to export the sample to a .wav file for any further analyses that may be required.

Figure 12 shows settings in the left hand panel allowing the operator to vary the parameters of the model, e.g. the mid frequency detector parameters and low frequency detector parameters. The sidebar shows the ability of the operator to validate the sample and submit it to the database for future use in training the model or other research.

In the right hand panel, the operator can add metadata such as whether the sample is identified as a whale or dolphin and the call type. This can be used in analysis in determining the accuracy of the model for different types of call. Figure 15 shows this dialog in more detail.

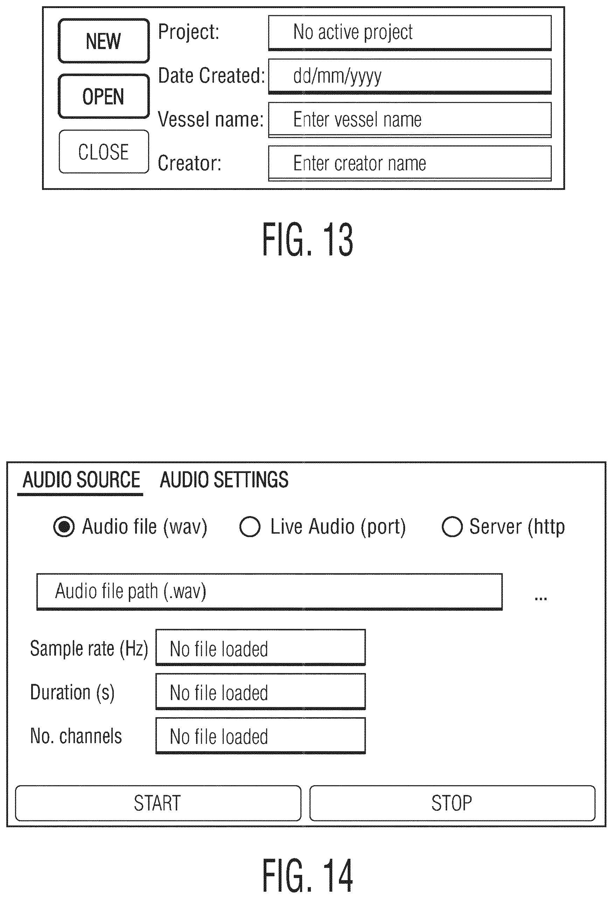

Figure 13 shows a dialog for the operator to create a project, e.g. to collect data relating to a particular instance of monitoring activity on a particular boat on a particular date by a particular operator, etc.

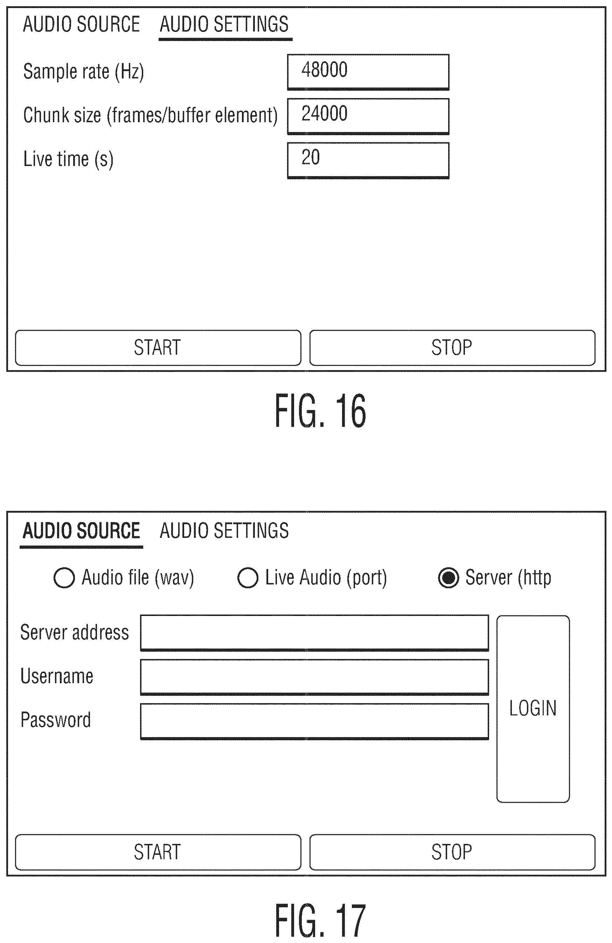

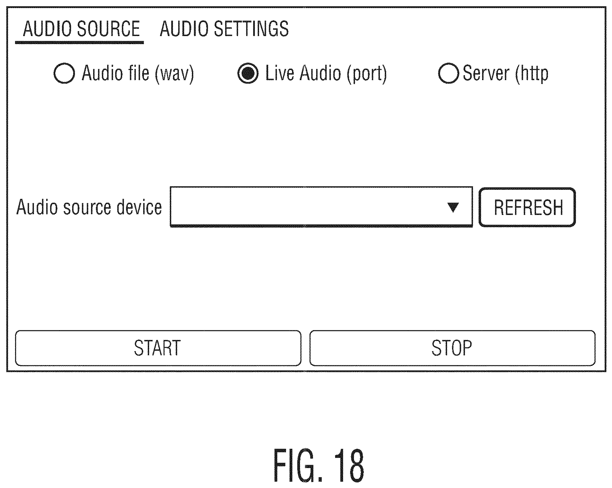

Figures 14 and 16 to 18 shows the ability of the operator to then open and load a particular audio source for analysis. This can be from a file (Figure 14), received live (Figure 18), or streamed from a server (Figure 17). As shown by Figure 16, the operator can configure the audio settings, here selecting the sample rate, chunk size and live time.

Figure 15 shows more detail of the dialog for the user to submit a sample to the master database. The user may review the sample, add metadata, and submit to the database (e.g. supported by backend SQLite database file).

### Results Pooling

Within a spectrogram sample, the appearance of both biological and non-biological acoustic artefacts may appear off-centre, causing ambiguity in classifying a feature as either biological or non-biological, especially when only a small section of it is visible. The model predictive performance may drop off where the sound of interest is off-centre, for example because of the loss of context of the sound of interest where it is close to an edge. This can cause false positives where a recent acoustic event appears on the extremity of the spectrogram and can be classified as a positive detection but later identified as non-biological when fully in frame. For example, boat propeller noise may initially resemble a biological sound and may be predicted as such by the model, but on further context to the sample, i.e. as the sound advances in the sliding window, its resemblance drops and the model can predict with more confidence that it is a non-biological sound. To mitigate this issue, the technique of aggregating multiple predictions on the same audio segment may be employed to generate an overall value for the given audio. This approach can leverage the fact that a given acoustic artefact will appear within multiple frames and is predicted on multiple times, thereby reducing the model's vulnerability to false positives.

Furthermore, in the event of true positives, the model can consistently predict positive on all audio samples containing biological sounds, which, when pooled together, can yield a net positive detection, thereby preserving the model's efficacy in detecting biological sounds.

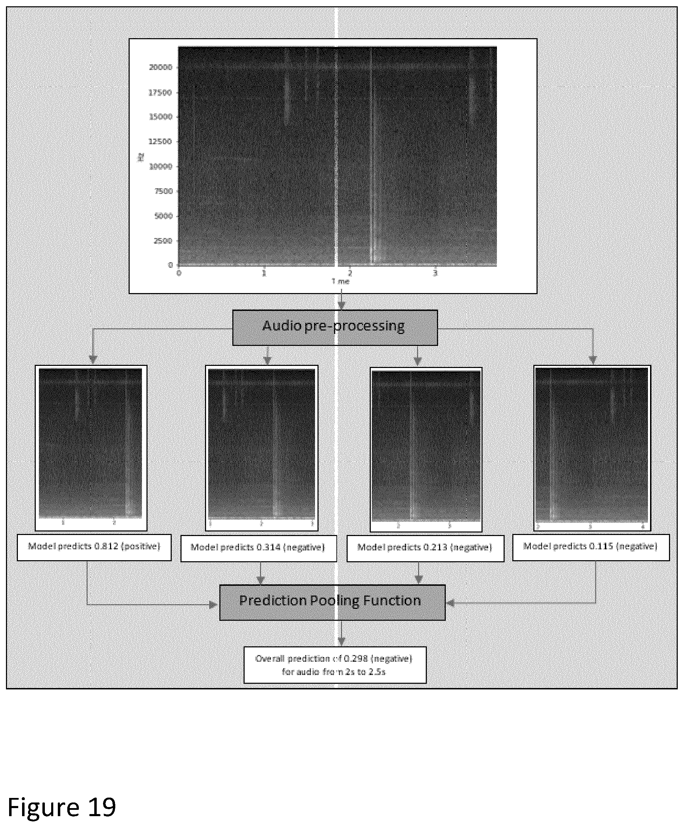

Figure 19 illustrates a method for aggregating multiple model predictions to eliminate false positives and obtain more accurate predictions. The audio can be divided into overlapping windows and inputted into the model, with the current configuration consisting of 2-second audio segments taken every half-second. As a result, each half-second audio can be represented in four samples, although this approach is customizable. In the example depicted in Figure 19, a non-biological sound emerges at approximately 2.2 seconds. Upon entering the frame in sample 1, the model initially struggles to classify it as biological or non-biological and makes a positive detection. However, as the sound progresses further into the frame in samples 2-4, the model predicts with increasing certainty that it is not a positive detection. By pooling these four predictions, a definitive negative prediction is generated for the time period of 2s to 2.5s, effectively mitigating the false positive.

The practice of pooling model results in this application can be a useful technique to ensure more accurate and reliable predictions and may be applied to some or all of the models, i.e. the low-, mid- and high- frequency models. By aggregating multiple predictions of the same audio snippet, the process can generate a probability for the period of audio that is contained in all the samples being predicted on, thus providing a more representative result. The prediction pooling function can then output an aggregated score. For instance, for each model, a moving average of the output of the model may be used, and then compared with the threshold for that model. Alternatively, the output of model may be required to stay above the threshold for a predetermined number of iterations (e.g. the persistence illustrated in Figure 11). While the exact pooling process would be optimised depending on factors such as the length audio and number of samples to pool samples, adopting more complex forms of pooling could significantly enhance its effectiveness. For instance, incorporating weighting to the different audio samples, particularly those in which the audio segment under consideration is in the centre of the frame, could further improve the accuracy of the pooled result. Therefore, the pooling process can be a component of the application that will be subject to optimizations to obtain the most precise and reliable predictions possible.

In the example shown, the model outputs predictions of 0.812 (positive), 0.314 (negative), 0.213 (negative) and 0.115 (negative) for the successive 0.5 second windows from t=0s to t=2s. The prediction pooling function can output a value of 0.298 based on an average with a higher weight to the middle samples, which is below the threshold and so gives a negative outcome for the period of t=2s to t=2.5s. Thus, the false negative prediction output by the model for the t=0 to t=0.5 s input can be suppressed by the prediction pooling technique.

### Example Computer System

Various embodiments of the present disclosure are described in terms of the example computer system of Figure 2. After reading this description, it will become apparent to a person skilled in the relevant art how to implement the present disclosure using other computer systems and/or computer architectures. The present disclosure can be implemented on a computer system or on a mobile application. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged.

Processor device may be a special purpose, or a general-purpose processor device specifically configured to perform the functions discussed herein. The processor device may be connected to a communications infrastructure, such as a bus, message queue, network, multi-core message-passing scheme, etc. The network may be any network suitable for performing the functions as disclosed herein and may include a local area network (LAN), a wide area network ONAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system may also include a main memory (e. g., random access memory, read-only memory, etc.), and may also include a secondary memory. The secondary memory may include the hard disk drive and a removable storage drive, such as a floppy disk drive, a magnetic tape drive, an optical disk drive, a flash memory, etc.

The removable storage drive may read from and/or write to the removable storage unit in a well-known manner. The removable storage unit may include a removable storage media that may be read by and written to by the removable storage drive. For example, if the removable storage drive is a floppy disk drive or universal serial bus port, the removable storage unit may be a floppy disk or portable flash drive, respectively. In one embodiment, the removable storage unit may be non-transitory computer readable recording media In some embodiments, the secondary memory may include alternative means for allowing computer programs or other instructions to be loaded into the computer system, for example, the removable storage unit and an interface. Examples of such means may include a program cartridge and cartridge interface (e. g., as found in video game systems), a removable memory chip (e.g., EEPROM, PROM, etc.) and associated socket, and other removable storage units and interfaces as will be apparent to persons having skill in the relevant art. Data stored in the computer system (e. g., in the main memory and/or the secondary memory) may be stored on any type of suitable computer readable media, such as optical storage (e.g., a compact disc, digital versatile disc, Blu-ray disc, etc.) or magnetic tape storage (e. g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system may also include a communications interface. The communications interface may be configured to allow software and data to be transferred between the computer system and external devices. Exemplary communications interfaces may include a modem, a network interface (e.g., an Ethernet card), a communications port, a PCMCIA slot and card, etc. Software and data transferred via the communications interface may be in the form of signals, which may be electronic, electromagnetic, optical, or other signals as will be apparent to persons having skill in the relevant art. The signals may travel via a communications path, which may be configured to carry the signals and may be implemented using wire, cable, fiber optics, a phone line, a cellular phone link, a radio frequency link, etc. The computer system may further include a display interface. The display interface may be configured to allow data to be transferred between the computer system and external display. Exemplary display interfaces may include highdefinition multimedia interface (HDMI), digital visual interface (DVI), video graphics array (VGA), etc. The display may be any suitable type of display for displaying data transmitted via the display interface of the computer system, including a cathode ray tube (CRT) display, liquid crystal display (LCD), light-emitting diode (LED) display, capacitive touch display, thin-film transistor (TFT) display, etc.

Computer program medium and computer usable medium may refer to memories, such as the main memory and secondary memory, which may be memory semiconductors (e.g., DRAMs, etc.). These computer program products may be means for providing software to the computer system. Computer programs (e.g., computer control logic) may be stored in the main memory and/or the secondary memory. Computer programs may also be received via the communications interface. Such computer programs, when executed, may enable computer system to implement the present methods as discussed herein. In particular, the computer programs, when executed, may enable processor device to implement the methods, as discussed herein. Accordingly, such computer programs may represent controllers of the computer system. Where the present disclosure is implemented using software, the software may be stored in a computer program product and loaded into the computer system using the removable storage drive, interface, and hard disk drive, or communications interface.

The processor device may comprise one or more modules or engines configured to perform the functions of the computer system. Each of the modules or engines may be implemented using hardware and, in some instances, may also utilize software, such as corresponding to program code and/or programs stored in the main memory or secondary memory. In such instances, program code may be compiled by the processor device (e.g., by a compiling module or engine) prior to execution by the hardware of the computer system.

For example, the program code may be source code written in a programming language that is translated into a lower level language, such as assembly language or machine code, for execution by the processor device and/or any additional hardware components of the computer system. The process of compiling may include the use of lexical analysis, preprocessing, parsing, semantic analysis, syntax-directed translation, code generation, code optimization, and any other techniques that may be suitable for translation of program code into a lower level language suitable for controlling the computer system to perform the functions disclosed herein. It will be apparent to persons having skill in the relevant art that such processes result in the computer system being a specially configured computer system uniquely programmed to perform the functions discussed above.

### Conclusion

Aspects of the disclosure provide a computer implemented method of detecting marine mammals, the method comprising: receiving acoustic data from one or more hydrophones; sampling the acoustic data and transforming the sampled acoustic data to time-frequency image data; processing the image data to transform the data to be suitable for input to a model; input the transformed input data to at least one model trained to detect the presence or absence of marine mammal vocalizations in the acoustic data, wherein the model automatically outputs a prediction of whether or not a mammal is present; providing output to a user indicating the prediction. This may allow for automation of the process of detecting marine mammals based on an audio feed and so provide objective, accurate predictions that require much reduced or no operator input.

In other aspects of the disclosure, inputting the prepared input data to each of two or more different models, respectively arranged to detect marine mammal sounds or vocalizations in different frequency ranges corresponding respectively to different mammal sounds or vocalizations. It has been found that different models are particularly well adapted for detecting mammal vocalizations in different frequency ranges, where different vocalizations and different types of noise may be expected. Thus, an important part of this aspect can be using different models to detect in particular whale noises in the low frequencies (e.g. including frequency ranges in the order of at least 10Hz to 1kHz to pick up moans and/or other typical whale vocalizations), and dolphin noises in the mid frequencies (e.g. including frequency ranges of at least 5kHz-10kHz). Example frequencies to use are 0Hz-3000Hz for the low frequency model and 0Hz to 48,000Hz for the mid frequency model (which in the spectrogram is 0-1500 Hz and 0-24,000Hz respectively). High frequency models may target vocalizations >100kHz, e.g. in the 192kHz to 250kHz frequency range. Different preprocessing of the data may be used for each model, such as generating spectrograms from the audio data with different parameters, etc.

In an example, at least a first model is a neural network iteratively trained to classify the mid frequency acoustic data on training set data comprising acoustic samples and label data indicating whether or not the sound or vocalization of a marine mammal is present in the sample. This model is found to be particularly effective for detecting whistles and moans of dolphins. Mid frequency sounds can be very complex, undulating sounds, leading to advantages for a neural network based approach, and which is why the low frequency approach would not work in the mid range.

In another example, a second model is a rule based approach operating on features extracted from the image data applied to low frequency acoustic data. This model has been found to be particularly effective in detecting vocalizations, e.g. moans, of whales and in particular picking out low resolution features from the noisy low frequency audio ranges. Low frequency images are such low resolution features that the mid frequency neural network model could not develop weights to properly converge.

In another example, a third model uses unsupervised learning techniques to detect echolocation signals in high frequency ranges.

Embodiments of the present disclosure have been described with particular reference to the examples illustrated. However, it will be appreciated that variations and modifications may be made to the examples described within the scope of the present claims.

## Claims

1. A computer implemented method of detecting marine mammals (30), the method comprising:
receiving (610) input data including acoustic data from one or more hydrophones (25);
down sampling the acoustic data and transforming (620) the sampled acoustic data to time-frequency image data, the time-frequency image data being a visual representation of the spectrum of frequencies of the acoustic data varying with time, wherein first image data is produced for mid frequency ranges of 0 to 24kHz ±25% and second image data is produced for low frequency ranges 0 to 1.5kHz ±25% by down sampling the acoustic data for the first image data at a mid-frequency rate and down sampling the acoustic data for the second image data at a low-frequency rate, and using different Fourier transform properties in transforming the sample acoustic data to image data for the first image and the second image comprising at least the number of samples of acoustic data used in each Fourier transformation;
processing (630) the image data to transform the data for input to a model by applying a tonal noise reduction filter to the image data;
inputting (640) the transformed first image data to a first model trained to detect the presence or absence of marine mammal vocalizations (40) in the acoustic data, wherein the first model is a convolutional neural network which automatically outputs a prediction of whether or not a mammal is present;
inputting (640) the transformed second image data to a second model iteratively trained to detect the presence or the absence of marine mammal vocalizations (40) in the acoustic data,
wherein the second model comprises: identifying at least one acoustic artifact in the transformed second image data, extracting features for the or each artifact, and inputting the features to a rules-based classifier on the features which automatically outputs the prediction of whether or not a mammal is present;
providing output to a user (5) indicating the prediction.

2. The method of claim 1, comprising:
wherein the transformed first image data is provided to the first model in successive first windows of a first time duration and the transformed second image data is provided to the second model in successive second windows of a second time duration wherein the first time duration is different from the second time duration.

3. The method of claim 1 or claim 2, wherein processing the first image data includes one or more of:
resizing the image data to suit model input requirements; and
standardizing the image data to zero mean and unit variance.

4. The method of any of claims 1 to 3, comprising splitting the input data into at least training data and test data, comprising the steps of training the model on the training data and testing the data on the test data to determine acceptable performance of the model, and optionally comprising further splitting the input data into validation data, wherein the validation data is used to tune hyperparameters of the model.

5. The method of any of claims 1 to 4, wherein processing the second image data includes one or more of:
resizing the image data to suit model input requirements;
filtering the spectrogram to expose acoustic artifacts.

6. The method of claim 1, comprising drawing a bounding box (1005) around the acoustic artifact, and wherein the plurality of features include one or more of:
a. spatial position, including one or more of centroid, minimum x, minimum y, maximum x, maximum y positions, wherein x position in the time axis and y is the position in the frequency axis.
b. percentage coverage in relative to its bounding box and the whole image.

7. The method of any preceding claim, comprising using a sliding window of plural time slices of audio data as input to the models.

8. The method of claim 7, comprising performing prediction pooling on plural successive windows such that plural positive detections output from the model are required for an overall positive detection.

9. The method of any of claims 1 to 8, comprising, automatically or in response to accepting user input, ceasing at least one on board marine activity if the prediction indicates the presence of a marine mammal, wherein the acoustic data and/or image data and prediction are displayed to a user for validation, and optionally the method comprises receiving user input indicating validation of the prediction, wherein the user validation overrides the decision to cease the marine seismic activity.

10. The method of claim 9, wherein the model is implemented by a computing device (15) on board a vessel (20) from which the hydrophone (25) measurements are taken and the output to a user for validation comprises communicating the data to a remote user (35) over a communication network (50), the method further comprising receiving the validation back at the computing device (!5) for display to a user (5).

11. The method of claim 1, wherein the output classification distinguishes between biological sources and non-biological sources, and optionally distinguishes between groups of aquatic mammals, including whales and delphinids and/or between species.

12. The method of claim 1, where the image data is a power spectrogram obtained using a Short-Time Fourier Transform.

13. A system (100) for detection of marine mammals (30), the system comprising:
a processing device (105) and memory (115) holding processor executable instructions;
an input interface configured to receive input data comprising acoustic data from one or more hydrophones (25);
a transformation module to sample the acoustic data and transform the sampled acoustic data to time-frequency image data the time-frequency image data being a visual representation of the spectrum of frequencies of the acoustic data varying with time, wherein first image data is produced for mid frequency ranges of 0 to 24kHz ±25% and second image data is produced for low frequency ranges 0 to 1.5kHz ±25% by down sampling the acoustic data for the first image data at a mid-frequency rate and down sampling the acoustic data for the second image data at a low-frequency rate, and using different Fourier transform properties in transforming the sample acoustic data to image data for the first image and the second image comprising at least the number of samples of acoustic data used in each Fourier transformation;
a preprocessing module to transform the image data for input to a model by applying a tonal noise reduction filter to the image data;
a first model module trained to detect the presence or absence of marine mammal vocalizations (40) in the transformed first image data, wherein the first model is a convolutional neural network;
a second model module trained to detect the presence or the absence of marine mammal vocalizations (40) in the transformed second image data, wherein the second model is configured to: identify at least one acoustic artifact in the transformed second image data, extract features for the or each artifact, and input the features to a rules-based classifier on the features which automatically outputs the prediction of whether or not a mammal is present; and,
an output interface to cause a prediction of whether or not a marine mammal is present to be displayed to a user by a display device or communicated to a remote user,
wherein the modules are implemented by a processing device (105) and memory (115) holding processor executable instructions of the system.

## Patentansprüche

1. Ein computerimplementiertes Verfahren zum Erkennen von Meeressäugern (30), das Verfahren umfassend:
Empfangen (610) von Eingangsdaten, einschließlich akustischer Daten, von einem oder mehreren Hydrophonen (25);
Downsampling der akustischen Daten und Umwandeln (620) der gesampelten akustischen Daten in Zeit-Frequenz-Bilddaten, wobei die Zeit-Frequenz-Bilddaten eine visuelle Darstellung des sich mit der Zeit ändernden Frequenzspektrums der akustischen Daten sind, wobei erste Bilddaten für mittlere Frequenzbereiche von 0 bis 24 kHz ±25 % und zweite Bilddaten für niedrige Frequenzbereiche von 0 bis 1,5 kHz ±25 % erzeugt werden, indem die akustischen Daten für die ersten Bilddaten mit einer mittleren Frequenzrate und die akustischen Daten für die zweiten Bilddaten mit einer niedrigen Frequenzrate downgesampelt werden, und Verwenden unterschiedlicher Fourier-Umwandlungseigenschaften beim Umwandeln der gesampelten akustischen Daten in Bilddaten für das erste Bild und das zweite Bild, die mindestens die Anzahl der in jeder Fourier-Umwandlung verwendeten Samples der akustischen Daten umfassen;
Verarbeiten (630) der Bilddaten, um die Daten für die Eingabe in ein Modell umzuwandeln, indem ein Filter zum Reduzieren des Tonrauschens auf die Bilddaten angewendet wird;
Eingeben (640) der umgewandelten ersten Bilddaten in ein erstes Modell, das darauf trainiert ist, das Vorhandensein oder Fehlen von Lautäußerungen von Meeressäugern (40) in den akustischen Daten zu erkennen, wobei das erste Modell ein faltungsneuronales Netzwerk ist, das automatisch eine Vorhersage darüber ausgibt, ob ein Säuger vorhanden ist oder nicht;
Eingeben (640) der umgewandelten zweiten Bilddaten in ein zweites Modell, das iterativ darauf trainiert ist, das Vorhandensein oder Fehlen von Lautäußerungen von Meeressäugern (40) in den akustischen Daten zu erkennen, wobei das zweite Modell umfasst: Identifizieren mindestens eines akustischen Artefakts in den umgewandelten zweiten Bilddaten, Extrahieren von Merkmalen für das oder jedes Artefakt und Eingeben der Merkmale in einen regelbasierten Klassifikator für die Merkmale, der automatisch die Vorhersage ausgibt, ob ein Säuger vorhanden ist oder nicht;
Bereitstellen einer Ausgabe für einen Benutzer (5), die die Vorhersage angibt.

2. Verfahren nach Anspruch 1, umfassend:
wobei die umgewandelten ersten Bilddaten dem ersten Modell in aufeinanderfolgenden ersten Fenstern einer ersten Zeitdauer bereitgestellt werden und die umgewandelten zweiten Bilddaten dem zweiten Modell in aufeinanderfolgenden zweiten Fenstern einer zweiten Zeitdauer bereitgestellt werden, wobei sich die erste Zeitdauer von der zweiten Zeitdauer unterscheidet.

3. Verfahren nach Anspruch 1 oder Anspruch 2, wobei das Verarbeiten der ersten Bilddaten eines oder mehrere der folgenden Schritte einschließt:
Anpassen der Größe der Bilddaten an die Anforderungen der Modelleingabe; und
Standardisieren der Bilddaten auf einen Mittelwert von null und eine Varianz von eins.

4. Verfahren nach einem der Ansprüche 1 bis 3, umfassend das Aufteilen der Eingabedaten in mindestens Trainingsdaten und Testdaten, umfassend die Schritte des Trainierens des Modells anhand der Trainingsdaten und des Testens der Daten anhand der Testdaten, um eine akzeptable Leistung des Modells zu bestimmen, und optional umfassend das weitere Aufteilen der Eingabedaten in Validierungsdaten, wobei die Validierungsdaten zum Abstimmen von Hyperparametern des Modells verwendet werden.

5. Verfahren nach einem der Ansprüche 1 bis 4, wobei das Verarbeiten der zweiten Bilddaten eines oder mehrere der folgenden Schritte einschließt:
Anpassen der Größe der Bilddaten an die Anforderungen der Modelleingabe;
Filtern des Spektrogramms, um akustische Artefakte aufzudecken.

6. Verfahren nach Anspruch 1, umfassend das Zeichnen eines Begrenzungsrahmens (1005) um das akustische Artefakt herum, wobei die Vielzahl von Merkmalen eines oder mehrere der folgenden einschließt:
a.räumliche Position, einschließlich eines oder mehrerer der folgenden: Schwerpunkt, minimale x-Position, minimale y-Position, maximale x-Position, maximale y-Position, wobei die x-Position die Position auf der Zeitachse und die y-Position die Position auf der Frequenzachse ist.
b.prozentuale Abdeckung relativ zu seinem Begrenzungsrahmen und zum gesamten Bild.

7. Verfahren nach einem der vorhergehenden Ansprüche, umfassend das Verwenden eines gleitenden Fensters aus mehreren Zeit-Slices von Audiodaten als Eingabe für die Modelle.

8. Verfahren nach Anspruch 7, umfassend das Durchführen eines Vorhersage-Poolings für mehrere aufeinanderfolgende Fenster, so dass mehrere positive Erkennungen, die von dem Modell ausgegeben werden, für eine positive Gesamterkennung erforderlich sind.

9. Verfahren nach einem der Ansprüche 1 bis 8, umfassend das automatische oder als Reaktion auf die Annahme einer Benutzereingabe erfolgende Beenden mindestens einer an Bord stattfindenden Meeresaktivität, wenn die Vorhersage das Vorhandensein eines Meeressäugers angibt, wobei die akustischen Daten und/oder Bilddaten und die Vorhersage einem Benutzer zur Validierung angezeigt werden, und wobei das Verfahren optional das Empfangen einer Benutzereingabe umfasst, die die Validierung der Vorhersage angibt, wobei die Benutzervalidierung die Entscheidung zum Beenden der marinen seismischen Aktivität außer Kraft setzt.

10. Verfahren nach Anspruch 9, wobei das Modell durch eine Rechenvorrichtung (15) an Bord eines Schiffes (20) implementiert wird, von dem aus die Hydrophonmessungen (25) vorgenommen werden, und die Ausgabe an einen Benutzer zur Validierung das Übermitteln der Daten an einen entfernten Benutzer (35) über ein Kommunikationsnetzwerk (50) umfasst, wobei das Verfahren ferner das Empfangen der Validierung zurück an der Rechenvorrichtung (15) zur Anzeige an einen Benutzer (5) umfasst.

11. Verfahren nach Anspruch 1, wobei die Ausgabeklassifizierung zwischen biologischen und nicht biologischen Quellen unterscheidet und optional zwischen Gruppen von Wassersäugern, einschließlich Walen und Delphiniden, und/oder zwischen Arten unterscheidet.

12. Verfahren nach Anspruch 1, wobei die Bilddaten ein Leistungsspektrogramm sind, das unter Verwendung einer Kurzzeit-Fourier-Umwandlung erhalten wurde.

13. System (100) zur Erkennung von Meeressäugern (30), das System umfassend:
eine Verarbeitungsvorrichtung (105) und einen Speicher (115), der von dem Prozessor ausführbare Befehle enthält;
eine Eingabeschnittstelle, die so konfiguriert ist, dass sie Eingabedaten empfängt, die akustische Daten von einem oder mehreren Hydrophonen (25) umfassen;
ein Umwandlungsmodul für das Sampling akustischer Daten und Umwandeln der gesampelten akustischen Daten in Zeit-Frequenz-Bilddaten, wobei die Zeit-Frequenz-Bilddaten eine visuelle Darstellung des sich mit der Zeit ändernden Frequenzspektrums der akustischen Daten sind, wobei erste Bilddaten für mittlere Frequenzbereiche von 0 bis 24 kHz ±25 % und zweite Bilddaten für niedrige Frequenzbereiche von 0 bis 1,5 kHz ±25 % erzeugt werden, indem die akustischen Daten für die ersten Bilddaten mit einer mittleren Frequenzrate und die akustischen Daten für die zweiten Bilddaten mit einer niedrigen Frequenzrate downgesampelt werden, und Verwendung unterschiedlicher Fourier-Umwandlungseigenschaften beim Umwandeln der gesampelten akustischen Daten in Bilddaten für das erste Bild und das zweite Bild, die mindestens die Anzahl der in jeder Fourier-Umwandlung verwendeten Samples der akustischen Daten umfassen;
ein Vorverarbeitungsmodul, um die Bilddaten für die Eingabe in ein Modell umzuwandeln, indem ein Filter zur Reduzierung von Tonrauschen auf die Bilddaten angewendet wird;
ein erstes Modellmodul, das darauf trainiert ist, das Vorhandensein oder Fehlen von Lautäußerungen von Meeressäugern (40) in den umgewandelten ersten Bilddaten zu erkennen, wobei das erste Modell ein faltungsneuronales Netzwerk ist;
ein zweites Modellmodul, das darauf trainiert ist, das Vorhandensein oder Fehlen von Lautäußerungen von Meeressäugern (40) in den umgewandelten zweiten Bilddaten zu erkennen, wobei das zweite Modell so konfiguriert ist, dass es mindestens ein akustisches Artefakt in den umgewandelten zweiten Bilddaten identifiziert, Merkmale für das oder jedes Artefakt extrahiert und die Merkmale in einen regelbasierten Klassifikator für die Merkmale eingibt, der automatisch die Vorhersage ausgibt, ob ein Säuger vorhanden ist oder nicht; und
eine Ausgabeschnittstelle, um zu veranlassen, dass eine Vorhersage darüber, ob ein Meeressäuger vorhanden ist oder nicht, einem Benutzer durch eine Anzeigevorrichtung angezeigt oder einem entfernten Benutzer übermittelt wird, wobei die Module durch eine Verarbeitungsvorrichtung (105) und einen Speicher (115) implementiert sind, der von dem Prozessor ausführbare Befehle des Systems enthält.

## Revendications

1. Procédé mis en œuvre par ordinateur de détection de mammifères marins (30), le procédé comprenant :
la réception (610) de données d'entrée comprenant des données acoustiques provenant d'un ou plusieurs hydrophones (25) ;
le sous-échantillonnage des données acoustiques et la transformation (620) des données acoustiques échantillonnées en données d'image temps-fréquence, les données d'image temps-fréquence étant une représentation visuelle du spectre des fréquences des données acoustiques variant dans le temps, dans lequel des premières données d'image sont produites pour des plages de moyennes fréquences de 0 à 24 kHz ±25 % et des secondes données d'image sont produites pour des plages de basses fréquences de 0 à 1,5 kHz ±25 % en sous-échantillonnant les données acoustiques pour les premières données d'image à une fréquence moyenne et en sous-échantillonnant les données acoustiques pour les secondes données d'image à une fréquence basse, et en utilisant différentes propriétés de transformée de Fourier pour transformer les données acoustiques échantillonnées en données d'image pour la première image et la seconde image comprenant au moins le nombre d'échantillons de données acoustiques utilisés dans chaque transformation de Fourier ;
le traitement (630) des données d'image pour transformer les données à des fins d'application en entrée dans un modèle en appliquant un filtre de réduction du bruit tonal aux données d'image ;
l'application en entrée (640) des premières données d'image transformées dans un premier modèle entraîné à détecter la présence ou l'absence de vocalisations (40) de mammifères marins dans les données acoustiques, le premier modèle étant un réseau neuronal convolutif qui délivre automatiquement en sortie une prédiction quant à la présence ou non d'un mammifère ;
l'application en entrée (640) des secondes données d'image transformées dans un second modèle entraîné de manière itérative à détecter la présence ou l'absence de vocalisations (40) de mammifères marins dans les données acoustiques,
dans lequel le second modèle comprend : l'identification d'au moins un artefact acoustique dans les secondes données d'image transformées, l'extraction de caractéristiques pour l'artefact ou chaque artefact, et l'application en entrée des caractéristiques dans un classificateur basé sur des règles concernant les caractéristiques qui délivre automatiquement en sortie la prédiction de la présence ou non d'un mammifère ;
la fourniture à un utilisateur (5) d'une sortie indiquant la prédiction.

2. Procédé selon la revendication 1, comprenant :
les premières données d'image transformées sont fournies au premier modèle dans des premières fenêtres successives d'une première durée, et les secondes données d'image transformées sont fournies au second modèle dans des secondes fenêtres successives d'une seconde durée, la première durée étant différente de la seconde durée.

3. Procédé selon la revendication 1 ou la revendication 2, dans lequel le traitement des premières données d'image comprend un ou plusieurs parmi :
le redimensionnement des données d'image pour les adapter aux exigences d'entrée du modèle ; et
la normalisation des données d'image à une moyenne nulle et une variance unitaire.

4. Procédé selon l'une quelconque des revendications 1 à 3, comprenant la division des données d'entrée en au moins des données d'apprentissage et des données de test, comprenant les étapes consistant à entraîner le modèle sur les données d'apprentissage et à tester les données sur les données de test afin de déterminer les performances acceptables du modèle, et facultativement comprenant en outre la division des données d'entrée en données de validation, les données de validation étant utilisées pour régler les hyperparamètres du modèle.

5. Procédé selon l'une quelconque des revendications 1 à 4, dans lequel le traitement des secondes données d'image comprend un ou plusieurs parmi :
le redimensionnement des données d'image pour les adapter aux exigences d'entrée du modèle ;
le filtrage du spectrogramme pour exposer les artefacts acoustiques.

6. Procédé selon la revendication 1, comprenant le tracé d'un cadre d'objet (1005) autour de l'artefact acoustique, et dans lequel la pluralité de caractéristiques comprend un ou plusieurs parmi :
a. la position spatiale, comprenant un ou plusieurs parmi un centroïde, des positions minimales x, minimales y, maximales x, maximales y, où x est la position sur l'axe du temps et y est la position sur l'axe de fréquence.
b. le pourcentage de couverture par rapport à son cadre d'objet et à l'image entière.

7. Procédé selon une quelconque revendication précédente, comprenant l'utilisation d'une fenêtre glissante de plusieurs tranches temporelles de données audio comme entrée pour les modèles.

8. Procédé selon la revendication 7, comprenant la réalisation d'un regroupement de prédictions sur plusieurs fenêtres successives de sorte que plusieurs détections positives délivrées en sortie à partir du modèle sont requises pour une détection positive globale.

9. Procédé selon l'une quelconque des revendications 1 à 8, comprenant, automatiquement ou en réponse à l'acceptation d'une entrée utilisateur, l'arrêt d'au moins une activité marine à bord si la prédiction indique la présence d'un mammifère marin, dans lequel les données acoustiques et/ou les données d'image et la prédiction sont affichées à un utilisateur pour validation, et le procédé comprenant facultativement la réception d'une entrée utilisateur indiquant la validation de la prédiction, dans lequel la validation de l'utilisateur remplace la décision d'arrêter l'activité sismique marine.

10. Procédé selon la revendication 9, dans lequel le modèle est mis en œuvre par un dispositif informatique (15) à bord d'un navire (20) à partir duquel les mesures de l'hydrophone (25) sont prises et la sortie vers un utilisateur à des fins de validation comprend la communication des données à un utilisateur distant (35) via un réseau de communication (50), le procédé comprenant en outre la réception de la validation en retour au dispositif informatique (15) à des fins de affichage à un utilisateur (5).

11. Procédé selon la revendication 1, dans lequel la classification de sortie distingue les sources biologiques des sources non biologiques, et, facultativement, distingue les groupes de mammifères aquatiques, y compris les baleines et les dauphins, et/ou les espèces.

12. Procédé selon la revendication 1, dans lequel les données d'image sont un spectrogramme de puissance obtenu à l'aide d'une transformée de Fourier à court terme.

13. Système (100) de détection de mammifères marins (30), le système comprenant :
un dispositif de traitement (105) et une mémoire (115) contenant des instructions exécutables par processeur ;
une interface d'entrée configurée pour recevoir des données d'entrée comprenant des données acoustiques provenant d'un ou plusieurs hydrophones (25) ;
un module de transformation pour échantillonner les données acoustiques et transformer les données acoustiques échantillonnées en données d'image temps-fréquence, les données d'image temps-fréquence étant une représentation visuelle du spectre des fréquences des données acoustiques variant dans le temps, dans lequel des premières données d'image sont produites pour des plages de moyennes fréquences de 0 à 24 kHz ±25 % et des secondes données d'image sont produites pour des plages de basses fréquences de 0 à 1,5 kHz ±25 % en sous-échantillonnant les données acoustiques pour les premières données d'image à une fréquence moyenne et en sous-échantillonnant les données acoustiques pour les secondes données d'image à une fréquence basse, et en utilisant différentes propriétés de transformée de Fourier pour transformer les données acoustiques échantillonnées en données d'image pour la première image et la seconde image comprenant au moins le nombre d'échantillons de données acoustiques utilisés dans chaque transformation de Fourier ;
un module de prétraitement pour transformer les données d'image à des fins d'application en entrée dans un modèle en appliquant un filtre de réduction du bruit tonal aux données d'image ;
un premier module de modèle entraîné à détecter la présence ou l'absence de vocalisations (40) de mammifères marins dans les premières données d'image transformées, le premier modèle étant un réseau neuronal convolutif ;
un second module de modèle entraîné à détecter la présence ou l'absence de vocalisations (40) de mammifères marins dans les secondes données d'image transformées, le second modèle étant configuré pour : l'identification d'au moins un artefact acoustique dans les secondes données d'image transformées, l'extraction de caractéristiques pour l'artefact ou chaque artefact, et l'application en entrée des caractéristiques dans un classificateur basé sur des règles concernant les caractéristiques qui délivre automatiquement en sortie la prédiction de la présence ou non d'un mammifère ; et,
une interface de sortie pour amener une prédiction indiquant si un mammifère marin est présent ou non, à être affichée à un utilisateur par un dispositif d'affichage ou à être communiquée à un utilisateur distant,
dans lequel les modules sont mis en œuvre par un dispositif de traitement (105) et une mémoire (115) contenant des instructions exécutables par processeur du système.
